# EUROPÄISCHE PATENTSCHRIFT

(11) **EP 3 823 455 B1**
(45) Veröffentlichungstag und Bekanntmachung des Hinweises auf die Patenterteilung: **01.10.2025**
(21) Anmeldenummer: 18743748.8
(22) Anmeldetag: 16.07.2018
(51) Int. Cl.: A21D 10/00, A21D 13/062, A23L 27/30, A23P 10/22

(54) **ZUSAMMENSETZUNG ZUR SUBSTITUTION VON ZUCKER IN BACKWAREN**
COMPOSITION FOR SUBSTITUTING SUGAR IN BAKED GOODS
COMPOSITION DE SUBSTITUTION DE SUCRE DANS LES PÂTISSERIES

(43) Veröffentlichungstag der Anmeldung: 26.05.2021
(73) Patentinhaber: Symrise AG, 37603 Holzminden (DE)
(72) Erfinder: SCHOPPMEIER, Thomas, 37603 Holzminden (DE); HELSBERG, Andreas, 32049 Herford (DE)
(74) Vertreter: Global IP Europe Patentanwaltskanzlei
(86) Internationale Anmeldenummer: PCT/EP2018/069323
(87) Internationale Veröffentlichungsnummer: WO 2020/015816

(56) Entgegenhaltungen:
- DE-A1- 2 740 245
- DE-U1- 29 618 566
- GB-A- 1 084 949
- GB-A- 998 016
- HELMAR SCHUBERT: "Instantisieren pulverförmiger Lebensmittel : Instantisieren pulverförmiger Lebensmittel", CHEMIE INGENIEUR TECHNIK., vol. 62, no. 11, 1 November 1990 (1990-11-01), WEINHEIM; DE, pages 892 - 906, XP055566462, ISSN: 0009-286X, DOI: 10.1002/cite.330621106
- SUSANNE STRUCK ET AL: "Sugar replacement in sweetened bakery goods", INTERNATIONAL JOURNAL OF FOOD SCIENCE AND TECHNOLOGY., vol. 49, no. 9, 1 August 2014 (2014-08-01), GB, pages 1963 - 1976, XP055508231, ISSN: 0950-5423, DOI: 10.1111/ijfs.12617

## Beschreibung

### Gebiet der Erfindung

Die vorliegende Erfindung betrifft ein Zuckermassensubstitut zur Substitution von Zucker, insbesondere von Saccharose, in Backwaren, ein Verfahren zur Herstellung des Zuckermassensubstituts zur Substitution von Zucker, insbesondere Saccharose, in Backwaren sowie die Verwendung eines derartigen Zuckermassensubstituts. Der Fokus der vorliegenden Erfindung liegt insbesondere darin, ein Zuckermassensubstitut bereitzustellen, das eine Reduzierung von Zucker, insbesondere Saccharose, in Backwaren ermöglicht, jedoch ohne signifikante Beeinträchtigung der backrelevanten Eigenschaften von Zucker, insbesondere Saccharose, wie Gebäcktextur, wie beispielsweise Volumen, Farbe und Geschmack.

### Stand der Technik

In den letzten Jahren steht ein zu hoher Zuckerkonsum vermehrt in der öffentlichen Kritik. Viele Studien deuten darauf hin, dass Zucker, insbesondere die Mono- und Disaccharide, für die Entstehung von Diabetes mellitus, Herz-Kreislauf-Erkrankungen und Fettleibigkeit mit verantwortlich sind.

Zusätzlich spielt das zunehmende Interesse an einer reduzierten Zuckeraufnahme in der Ernährung durch gesundheitsbewusste Konsumenten eine große Rolle. Die Anforderung, Zucker in Lebensmitteln zu reduzieren, ist daher das Ziel vieler Lebensmittelhersteller. Der klassische Einsatzzweck ist also der Ersatz von Zucker im Rahmen von diätetischen Nahrungsmitteln für Diabetiker, in "light" Produkten und nicht zuletzt in zahnschonenden Produkten.

Einige Nahrungsmittelhersteller haben schon längst reagiert und in kalorienreduzierten Getränken den Zucker durch Süßstoffe substituiert. Die fehlende Masse durch den Einsatz viel kleinerer Mengen an Süßstoffen kann hierbei durch Wasser kompensiert werden.

Problematischer ist der Volumenersatz jedoch bei anderen Nahrungsmitteln, insbesondere bei Backwaren. Zucker ist hier ein wichtiger Bestandteil, der eine Vielzahl an Funktionen wie die natürliche Süße, Füllstoffeigenschaft, Textur und Mundgefühl liefert. Diese Eigenschaften müssen bei einem Austausch oder Ersatz ausgeglichen werden.

Eine der wichtigsten Eigenschaften von Zucker, insbesondere Saccharose, ist das Hervorrufen eines charakteristisch süßen Geschmackes. Zucker, insbesondere Saccharose, besitzt eine typische Süße, die sich durch eine zeitnah einsetzende Wirkung und ein recht schnelles Abklingen auszeichnet.

In Backwaren dient Zucker, insbesondere Saccharose, nicht nur als Süßungsmittel, sondern besitzt eine Vielzahl an multifunktionalen Eigenschaften. Neben der natürlichen Süße sorgt der Zusatz von Zucker, insbesondere Saccharose, für die Gebäcktextur, die Bräunung und das typische Mundgefühl. Daneben sorgt Zucker, insbesondere Saccharose, für die Ausbildung und Verstärkung von Aromakomponenten in Lebensmitteln. Außerdem ist Zucker, insbesondere Saccharose, ein massegebender Teigbestandteil in Backwaren. Ein hoher Zuckergehalt kann zudem die Haltbarkeit von Gebäcken verlängern und sorgt für eine längere Frischhaltung.

Saccharose wird umgangssprachlich auch Haushaltszucker, Kristallzucker oder einfach Zucker genannt.

Saccharosekristalle sind bis etwa 140 °C thermisch stabil. Ab einer Temperatur zwischen 182 und 190 °C fangen die Kristalle an zu schmelzen. Der genaue Schmelzpunkt ist jedoch stark vom Reinheitsgrad des Zuckers abhängig. Gleichzeitig entsteht zwischen 160 und 190 °C eine gelb-bräunliche Verfärbung, da der Zucker zu karamellisieren beginnt. Während des Karamellisierungsprozesses laufen eine Reihe von chemischen Prozessen im Zucker ab. Der hierbei erzeugte Karamellzuckersirup sorgt für eine geschmackliche Veränderung. Dieser Vorgang läuft während des Backprozesses in Backwaren ab und sorgt für ein typisches Aroma.

Saccharose besteht als Dimer aus je einem Molekül α-D-Glucose (Pyranoseform) und β-D-Fructose (Furanoseform). Diese beiden Moleküle sind über eine α,β-1,2-glycosidische Bindung miteinander verbunden (Glucose α1-2 Fructose). Das bedeutet, dass Glucose und Fructose über ihre beiden anomeren C-Atome O-glycosidisch miteinander verknüpft sind und es sich daher bei Saccharose um ein nicht-reduzierendes Disaccharid handelt. Dadurch sind nur die Abbauprodukte von Saccharose direkt oder indirekt an der Maillard Reaktion beteiligt. Dies hat einen großen Einfluss auf die Bräunung, da es bei Erhitzungsvorgängen nur zu einer stark reduzierten Maillard-Reaktion kommt im Vergleich zu den freien Monosacchariden Fructose oder Glucose.

Je nach Zuckerart und -menge löst sich dieser nicht vollständig im Teig auf, sodass die einzelnen Zuckerkristalle im Gebäck sensorisch spürbar sind. Außerdem bildet der Zucker einen großen Teil des Teiggefüges. Mit steigendem Zuckeranteil im Teig wird dieser weicher und verliert seine typische Elastizität. Aufgrund der daraus folgenden kompakten Krumenstruktur, verringert sich das Backvolumen. Zudem sorgt Saccharose durch seinen osmotischen Druck für eine Frischhaltung in wasserarmen Lebensmitteln wie Mürbeteigen.

Zur Charakterisierung von süßschmeckenden Stoffen wird die relative Süßkraft verwendet. Diese ist eine dimensionslose Größe, welche die relative Süße eines Stoffes im Vergleich zu Saccharose angibt. Als Standardsubstanz dient Saccharose als 10 %-ige Lösung. Die Süßkraft gibt daher eine Vergleichszahl an, die sich auf die Süßempfindung von Saccharose bezieht. Die wahrgenommene Süße ist jedoch nicht objektiv messbar, wodurch eine sensorische Analyse notwendig ist.

Aktuell werden als Zuckerersatzstoffe bzw. Zuckersubstitute vorwiegend Zuckeraustauschstoffe oder Süßstoffe eingesetzt.

Zuckeraustauschstoffe sind süß schmeckende Verbindungen, meist Polyole (sogenannte Zuckeralkohole), die einen geringeren Einfluss auf den Blutzuckerspiegel haben als Zucker (Saccharose), da sie Insulin-unabhängig verstoffwechselt werden. Daher werden sie vorwiegend in der Diabetikerernährung verwendet. In der EU zugelassene Zuckeraustauschstoffe sind: Zuckeralkohole (vorzugsweise Sorbit, Mannit, Isomalt, Maltit, Maltilol-Sirup, Lactit, Xylit, Erythrit), sowie Fructose, Inulin, Isomaltulose, Maissirup (high fructose corn syrup; HFCS), Oligofructose, Stärkehydrolysat, Trehalose, Trehalulose.

Süßstoffe sind synthetische hergestellte oder natürliche Ersatzstoffe für Zucker. Sie besitzen sehr unterschiedliche chemische Strukturen. Im Vergleich zu Zucker besitzen Süßstoffe keinen oder nur geringen physiologischen Brennwert. In der EU zugelassene Süßstoffe sind: Acesulfam, Advantam, Aspartam, Aspartam-Acesulfam-Salz, Cyclamat, Neohesperidindihydrochalkon, Neotam, Saccharin, Sucralose, Steviosid und Thaumatin. In der EU zurzeit nicht zugelassene bevorzugte Süßstoffe sind: Alitam, Brazzein, Dulcin, Hernandulcin, Lugdunam, Monellin, Pentadin, 5-Nitro-2-propoxyanilin.

Die meisten der o.g. Zuckeraustauschstoffe und Süßstoffe haben eine ähnliche oder viel stärkere Süßkraft wie/als Zucker. Während Zuckeralkohole über eine hinreichende Masse oder ein hinreichendes Volumen verfügen, haben sie oft einen negativen Einfluss auf die Textur- und Geschmackseigenschaften von Produkten. Darüber hinaus besitzen Zuckeralkohole beim Verzehr in größeren Mengen eine abführende Wirkung. Süßstoffe hingegen verfügen aufgrund ihrer Süßkraft nicht über eine hinreichende Masse oder ein hinreichendes Volumen, um Saccharose direkt zu ersetzen, sondern werden ausschließlich zum Süßen verwendet. Süßstoffe schmecken in der Regel nicht ausschließlich süß. Häufig existiert eine zusätzlich bittere Geschmackskomponente. Aufgrund ihrer nachteiligen Eigenschaften ist daher die Verwendung von Zuckeraustauschstoffen und Süßstoffen bei der Herstellung von Lebensmitteln begrenzt.

Es ist bekannt, dass bei einer Reduzierung der Zuckermenge in einem Lebensmittel sich regelmäßig nicht nur das gesamte sensorische Profil dieses Lebensmittels verändert, sondern auch die Eigenschaften wie Textur, Farbe und Geschmack.

Bei einer Zuckersubstitution in Backwaren müssen neben der Süße vor allem das fehlende Volumen sowie die weiteren Backeigenschaften des Zuckers ersetzt bzw. kompensiert werden. Dabei sollen sowohl die geschmacklichen Defizite, als auch die Defizite bezüglich Gebäcktextur, Farbe und Geschmack, die durch die Reduktion von Zucker verursacht werden, weitgehend vermieden werden, um die Präferenz für das Lebens- und/oder Genussmittel zu erhalten.

Da die Zuckerreduktion beziehungswiese die Zuckersubstitution ein kommerziell interessantes Thema ist, gibt es viele bestehende Patente und Gebrauchsmuster, die mögliche Lösungsansätze beschreiben.

So beschreibt beispielsweise das Gebrauchsmuster DE 296 18 566 U1 einen Zuckerersatzstoff, der aus einem Süßkraftersatzstoff und einem Volumen-/Gewichtsersatzstoff besteht. Bei dem Volumen-/Gewichtsersatzstoff handelt es sich beispielsweise um Kleie und/oder Lactose und bei dem Süßkraftersatzstoff handelt es sich um Süßstoffe wie Saccharin, Cyclamat, Aspartam, Acesulfam etc..

Die WO 2017/093302 A1 offenbart eine Zusammensetzung, mit der Zucker in Süßwaren um bis zu 40 % reduziert werden kann. Es wird vorgeschlagen, Zucker durch amorph-poröse Partikel, die Zucker, ein Füllmittel und einen Emulgator umfassen, zu ersetzen. Aufgrund ihrer Struktur lösen sich die Partikel im Mund schneller auf, so dass ein stärkeres Süßempfinden generiert wird. Die amorphporösen Partikel werden durch ein herkömmliches Sprühtrocknungsverfahren hergestellt.

Die WO 2015/150915 A2 offenbart eine Süßstoffzusammensetzung, die aus einem Trägerstoff besteht, der mit süßenden Substanzen beschichtet wird, die eine verbesserte Süße sowie einen reduzierten Kaloriengehalt im Vergleich zu anderen Kohlenhydratkomponenten bei gleichbleibender Masse besitzt. Als Trägerstoff werden eine Vielzahl an Stoffen genannt, unter anderem Siliziumdioxid, Zellulose, modifizierte Stärke, Maltodextrin und verschiedene Verdickungsmittel. Als Verfahren wird ein Coating mit vorherigem Zerkleinern der eingesetzten Stoffe beschrieben. Die chemische Struktur der eingesetzten Stoffe wird durch das Verfahren nicht verändert. Als Anwendungsbereich nennt das Patent verschiedene Nahrungsmittel wie Süßwaren, Schokolade, Backwaren, Gewürze, Saucen, Verbände, Zahnpasta, Kaugummi und Milchprodukte.

Die WO 2015/159156 A2 beschreibt eine Süßstoffzusammensetzung mit reduziertem Kaloriengehalt aus einem Trägerstoff und einer süßenden Komponente. Zusätzlich wird noch ein Katalysator eingesetzt. Als süßende Substanz werden Zucker, sowie Zuckeraustauschstoffe und Süßstoffe genannt. Als Verfahren wird ein Mischen der Süßstoffkomponente mit einem Trägerverbindungsvorläufer und einem Katalysator beschrieben. Der Katalysator wandelt dann den Trägerverbindungsvorläufer in eine Trägerverbindung um, die dann mit den Süßstoffkohlenhydraten zusammenwirkt, um die Süßstoffzusammensetzung zu bilden. Der Katalysator wird nach dem Herstellprozess wieder entfernt.
Ähnliche Verfahren wie zur Zuckerreduktion werden auch zur Salzreduktion angewandt. Die EP 2 156 748 A1 beschreibt eine Zusammensetzung zur Reduzierung von Natriumchlorid. Zu Herstellung der Zusammensetzung wird ein Trägerpartikel mit feinen Salzpartikeln behaftet. Hierzu wird der Trägerpartikel in einem fluidisierenden Mischer mit einem hochspreitenden Öl besprüht und beschichtet. Anschließend werden dem Mischprozess feine Salzpartikel zugefügt, die an dem Trägerpartikel anhaften. Dadurch entsteht ein Partikelkollektiv, welches in trockener Anwendung wie Speisesalz eingesetzt werden kann. Dieses Partikelkollektiv schmeckt salzig und ist daher für eine Zuckersubstitution, insbesondere in Backwaren, ungeeignet.

Primäre Aufgabe der vorliegenden Erfindung ist deshalb, eine Zusammensetzung bereitzustellen, mit der Zucker in Backwaren reduziert werden kann und mit der gleichzeitig alle backrelevanten Eigenschaften von Zucker, insbesondere Saccharose, nämlich das Süßeprofil, die Volumenbildung (Produktmatrix), die Bräunungseigenschaften sowie die Textur, aufrecht erhalten werden können, vorzugsweise womit eine Reduktion des Gehaltes an Zucker, insbesondere Saccharose, um bis zu 50 Gew.-% erreicht werden kann. Darüber hinaus soll die Zusammensetzung in den Backwaren im Verhältnis 1:1 mit Zucker ausgetauscht werden können. Das Herstellverfahren für solche Verfahren soll ferner einfach, kurz und kostengünstig sein.

### Zusammenfassung der Erfindung

Die vorliegende Problemstellung wird durch die Gegenstände der unabhängigen Patentansprüche gelöst.

Ein erster Gegenstand der vorliegenden Erfindung betrifft ein Zuckermassensubstitut, umfassend ein oder bestehend aus einem Aufbauagglomerations-Partikelkollektiv, umfassend oder bestehend aus den folgenden Bestandteilen:
(a) 3 bis 65 Gew.-% eines oder mehrerer Trägerstoffe(s);
(b) 0,5 bis 15 Gew.-% eines oder mehrerer Fette(s) oder Öle(s);
(c) kristallinen oder teilkristallinen Zucker, insbesondere kristalline oder teilkristalline Saccharose, als Hauptzucker, wobei der kristalline oder teilkristalline Zucker auf die Oberfläche des mit dem Öl oder Fett überzogenen Trägerstoffs aufgebracht ist; und
(d) optional 0 bis 10 Gew.-% einer oder mehrerer sensorisch aktiver Substanz(en).

Eine zweite erfindungsgemäße Ausgestaltung betrifft ein Verfahren zur Herstellung eines Zuckermassensubstituts, welches die folgenden Schritte umfasst oder aus den folgenden Schritten besteht:
(i) Bereitstellen von (a) einem oder mehreren Trägerstoff(en); (b) einem oder mehreren Fett(en) oder Öl(en); (c) kristallinem oder teilkristallinem Zucker, insbesondere kristalliner oder teilkristalliner Saccharose, als Hauptzucker; und (d) optional einer oder mehrerer sensorisch aktiven Substanz(en); und
(ii) Agglomeration der Bestandteile (a), (b), (c) und optional (d) durch Aufbauagglomeration unter Erhalt eines primären Feststoffagglomerats; und optional
(iii) Zuführen eines weiteren kristallinen oder teilkristallinen Zuckers, dessen Partikelgröße kleiner ist als die Partikelgröße des Hauptzuckers und Agglomeration auf der Oberfläche des primären Feststoffagglomerats; unter Erhalt eines Aufbauagglomerations-Partikelkollektivs.

Des Weiteren betrifft die vorliegende Erfindung die Verwendung des Zuckermassensubstituts, zur Herstellung von Backwaren oder von Backmischungen.

Ein weiterer Aspekt der vorliegenden Erfindung betrifft die Verwendung des Zuckermassensubstituts, zur Substitution von Saccharose in Backwaren oder in einer Backmischung, insbesondere zur Substitution von Saccharose in Backwaren um 20 bis 50 Gew.-%.

Bevorzugte Ausgestaltungen der erfindungsgemäßen Gegenstände ergeben sich aus dem Wortlaut der abhängigen Patentansprüche sowie der nachfolgenden detaillierten Beschreibung.

### Beschreibung der Figuren

Figur 1 ist eine schematische Darstellung des Prinzips der Agglomeration.
Figur 2 ist eine mikroskopische Aufnahme von Zuckerkristallen.
Figur 3 ist eine mikroskopische Aufnahme des Aufbauagglomerations-Partikelkollektivs der erfindungsgemäßen Zusammensetzung.
Figur 4 ist ein Diagramm mit der Partikelgrößenverteilung eines Aufbauagglomerations-Partikelkollektivs der erfindungsgemäßen Zusammensetzung.
Figur 5 ist ein Diagramm mit der Partikelgrößenverteilung von kristallinem Zucker.
Figuren 6a und 6b veranschaulichen die Zuckerreduktion mit der erfindungsgemäßen Zusammensetzung am Beispiel eines Kekses.
Figur 7 ist eine Darstellung der verwendeten JAR-Skalen zur sensorischen Beurteilung der Gebäckbräunung, Süße und Knusprigkeit.

### Detaillierte Beschreibung der Erfindung

In einem ersten Aspekt betrifft die vorliegende Erfindung ein Zuckermassensubstitut, umfassend ein oder bestehend aus einem Aufbauagglomerations-Partikelkollektiv, umfassend oder bestehend aus den folgenden Bestandteilen:
(a) 3 bis 65 Gew.-% eines oder mehrerer Trägerstoffe(s);
(b) 0,5 bis 15 Gew.-% eines oder mehrerer Fette(s) oder Öls(s);
(c) 25 bis 70 Gew.-% kristallinen oder teilkristallinen Zuckers, insbesondere kristalline oder teilkristalline Saccharose, als Hauptzucker, wobei der kristalline oder teilkristalline Zucker auf die Oberfläche des mit dem Öl oder Fett überzogenen Trägerstoffs aufgebracht ist; und
(d) 0 bis 10 Gew.-% optional einer oder mehrerer sensorisch aktive Substanz(en).

Die vorliegende Erfindung beruht auf der überraschenden Erkenntnis, dass sich mit der erfindungsgemäßen Zusammensetzung der Zuckergehalt, insbesondere der Saccharosegehalt, in Backwaren oder Backmischungen stark reduzieren lässt, regelmäßig um 20 bis 50 Gew.-%, wobei die besten Resultate bei einer Reduzierung des Zuckergehaltes, insbesondere des Saccharosegehaltes, im Bereich von 30 bis 40 Gew.-% erzielt werden, während gleichzeitig alle backrelevanten Eigenschaften von Zucker, insbesondere Saccharose, nämlich Süßeprofil, Volumenbildung (Produktmatrix), Farbe bzw. Bräunung sowie Textur in den hergestellten Backwaren aufrecht erhalten werden können

Aktuell ist noch keine einzelne Substanz bekannt, welche die gesamten Backeigenschaften von Zucker, insbesondere von Saccharose, wirkungsgleich ersetzen kann. Überraschend hat sich herausgestellt, dass mit der erfindungsgemäßen Zusammensetzung Zucker, insbesondere Saccharose, in Backwaren substituiert oder reduziert werden kann, während gleichzeitig die multifunktionalen Eigenschaften von Zucker, insbesondere Saccharose, in Backwaren annähernd erhalten werden, wenn die erfindungsgemäße Zusammensetzung als Aufbauagglomerations-Partikelkollektiv vorliegt.

Zucker, die ganz oder teilweise ersetzt oder substituiert werden können, sind v.a. solche Zucker, die als Süßungsmittel bei der Herstellung von Nahrungsmitteln, insbesondere bei der Herstellung von Backwaren, verwendet werden, also vorzugsweise alle süß schmeckenden Mono-, Di-, Tri-, und Oligosaccharide, insbesondere Saccharose, Fructose, Glucose, Mannose, Galactose, Allulose, Lactose, Maltose, oder auch Trehalose und Raffinose, sowie Maltodextrine etc. Ersetzt werden können auch die, bei der Herstellung von Nahrungsmitteln verwendeten, flüssigen Varianten der üblichen Mono- und Disaccharide, vorzugsweise Flüssigzucker, Invertflüssigzucker, Invertzuckersirup, Glucose-Sirup, etc.

Das Aufbauagglomerations-Partikelkollektiv gemäß der vorliegenden Erfindung wird durch technische Abläufe hergestellt, bei denen durch eine Anhäufung der vorher losen Einzelbestandteile (a), (b), (c) und optional (d) der erfindungsgemäßen Zusammensetzung ein Verbund oder Anhäufung gebildet, in dem oder in der die Einzelbestandteile stabil aneinander haften, um damit verschiedene Vorteile zu generieren und dabei insbesondere eine Annäherung an die Stoffeigenschaften von Zucker, insbesondere Saccharose, u. a. bei der Simulation in Backwaren, herzustellen.

Das Aufbauagglomerations-Partikelkollektiv der erfindungsgemäßen Zusammensetzung, d.h. das Zuckermassensubstitut, wird durch ein Aufbauagglomerationsverfahren hergestellt, vorzugsweise durch Feuchtagglomerationsverfahren.

Bei den zuvor genannten Agglomerationsverfahren werden aus einem oder mehreren einzelnen Bestandteilen durch Anhäufung unter Wirksamwerden von Bindekräften größere Partikel bzw. ein Partikelkollektiv erzeugt. Die durch das Zusammenfügen oder die Anhäufung der einzelnen Bestandteile entstehenden Stoffgebilde werden auch als Agglomerate bezeichnet.

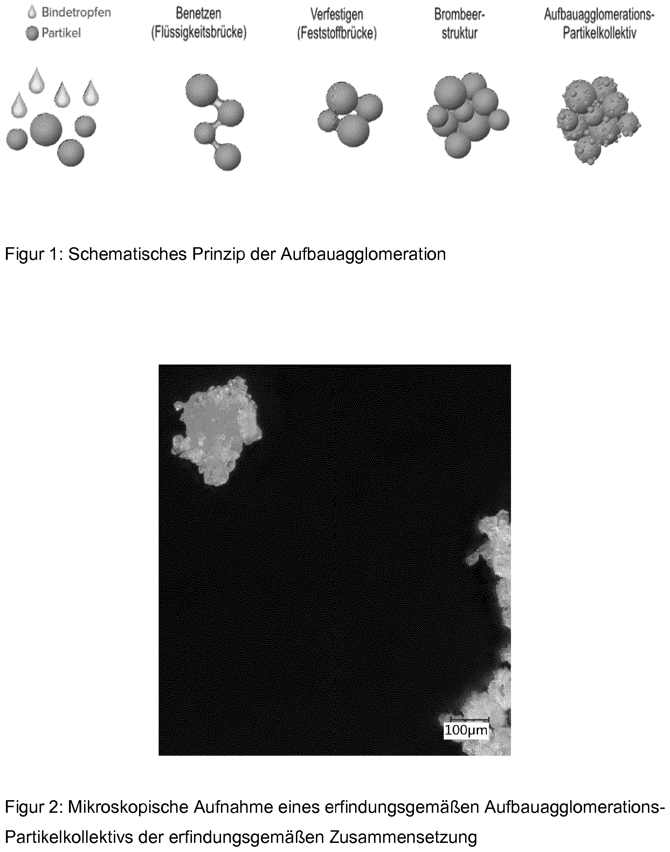

Das Prinzip der Aufbauagglomeration ist schematisch in Figur 1 wiedergegeben. Wie aus Figur 1 ersichtlich ist, weist das durch Agglomeration erhaltene Aufbauagglomerations-Partikelkollektiv eine poröse Struktur auf, bei der größere und kleinere strukturgebende Element sich zu einem Gesamtgebilde zusammenlagern, dessen Eigenschaften aufgrund räumlicher Anordnung über die Eigenschaften der Einzelelement hinausgehen.

Durch die Aufbauagglomeration wird die Partikelgrößenverteilung des damit erhaltenen Partikelkollektivs in einen gröberen Größenbereich verschoben. Ziel des Agglomerationsprozesses ist die systematische Herstellung eines Aufbauagglomerations-Partikelkollektivs oder Agglomerats mit gezielten Eigenschaften. Hierzu gehört beispielsweise die Verringerung von Staubanteilen, die Entstehung von Porosität, die Vermeidung von Entmischungen, ein verbessertes Dispergier- und Löseverhalten, die gezielte Freisetzung der Süße des enthaltenen Zuckers sowie die gezielte Einstellung von Form, Größe, Homogenität und Festigkeit.

Erfindungsgemäß wird bei der Agglomeration der Bestandteile (a), (b), (c) und optional (d) der o.g. Zusammensetzung vorzugsweise die Partikelgröße des Aufbauagglomerations-Partikelkollektivs an die Partikelgröße des Zuckers angepasst. Ein weiteres Ziel der Agglomeration ist insbesondere das Vereinen der einzelnen Bestandteile zu einem Agglomerat, wodurch eine Entmischung der einzelnen Bestandteile verhindert wird.

Insbesondere werden Eigenschaften eines Partikelkollektivs von den Eigenschaften der Einzelpartikel und der Partikelumgebung bestimmt. Da die Merkmale zur Beschreibung von Einzelpartikeln stets auf die einzelnen Partikel verteilt sind, müssen die Partikeleigenschaften an vielen Individuen gemessen werden. Die Eigenschaften von Partikelkollektiven werden am Kollektiv gemessen. Beide Eigenschaften - die der Einzelpartikel und die des Kollektivs - wirken sich auf die Produkteigenschaften aus. Insbesondere verfahrenstechnisch relevante Eigenschaften lassen sich nur direkt am Partikelkollektiv, d.h. am Schüttgut, messen, z.B. spezifische Oberfläche, Schüttgutdichte, Packungsvolumen, Fließeigenschaften, Verdichtungsverhalten, Anordnung der Partikel und Mischungshomogenität.

Innerhalb des Partikelkollektivs bzw. des Agglomerats sind Bindekräfte für den Zusammenschluss der Einzelbestandteile verantwortlich. Hierbei überwiegen vor allen die nicht-kovalenten Bindungen zwischen den Partikeln der einzelnen Bestandteile. Die Haftkräfte zwischen den Partikeln sind darüber hinaus abhängig von einer Vielzahl an Einflussfaktoren: der Partikelgröße der Bestandteile, dem Abstand der Partikel zueinander, den Partikeleigenschaften, der Partikelgrößenverteilung sowie Form und Feuchtigkeit.

In einem Partikelkollektiv bzw. Agglomerat bilden sich unterschiedliche interpartikuläre Wechselwirkungen aus, die dazu beitragen, dass die einzelnen Bestandteile des Partikelkollektivs bzw. Agglomerats aneinanderhaften und mehrere Bestanteile zu einem größeren Partikel zusammengeführt werden. Zu den Haft- oder Bindekräften, die für den Zusammenschluss der einzelnen Bestandteile beitragen gehören beispielsweise Flüssigkeitsbrücken, van-der-Waals-Kräfte, Sinterbrücken sowie elektrostatische Kräfte. Die am stärksten wirkenden Haftkräfte innerhalb eines Agglomerats sind die Flüssigkeitsbrücken in Folge kapillarer Kräfte, die wesentlich höhere Haftkräfte als die van-der-Waals-Kräfte und die elektrostatischen Kräfte besitzen. Aus diesem Grund wird der Agglomerationsprozess vorteilhafterweise mittels Benetzung mit einer Flüssigkeit durchgeführt.

In einer weiteren bevorzugten Ausgestaltung des ersten Erfindungsgegenstandes betrifft die vorliegende Erfindung die erfindungsgemäße Zusammensetzung, d.h. das erfindungsgemäße Zuckermassensubstitut, das darüber hinaus auf der Oberfläche des Aufbauagglomerations-Partikelkollektivs einen weiteren kristallinen oder teilkristallinen Zucker, insbesondere kristalline oder teilkristalline Saccharose, umfasst, dessen/deren Partikelgröße kleiner ist als die Partikelgröße des Hauptzuckers. Hierbei weist der Hauptzucker vorzugsweise eine Partikelgröße mit einem D50-Wert im Bereich von 50 bis 300 µm auf, vorzugsweise von 100 µm bis 200 µm. Der weitere kristalline oder teilkristalline Zucker weist vorzugsweise eine Partikelgröße mit einem D50-Wert im Bereich von 10 bis 50 µm auf.

In einer noch weiteren Variante gemäß dem ersten Aspekt der vorliegenden Erfindung umfasst das Aufbauagglomerations-Partikelkollektiv der erfindungsgemäßen Zusammensetzung einen Kern aus einem oder mehreren Trägerstoff(en). In dieser Ausführungsform werden kleinere Saccharose-Partikel durch Haftkräfte, beispielsweise durch Flüssigkeitsbrücken, mittels eines Benetzungsmittels, beschichtungsmäßig an die Oberfläche eines Kernpartikels gebunden, der aus einem oder mehreren Trägerstoff(en) gebildet ist.

Im Folgenden werden die Bestandteile (a) bis (d) sowie deren bevorzugte Ausgestaltungen der erfindungsgemäßen Zusammensetzung des ersten Gegenstandes der vorliegenden Erfindung beschrieben und sind mit den vorstehend beschriebenen bevorzugten Ausgestaltungen des ersten Erfindungsgegenstandes sowie untereinander, soweit sinnvoll, beliebig kombinierbar.

### Bestandteil (a) - ein oder mehrere Trägerstoff(e)

Bei dem einen oder den mehreren Trägerstoff(en) der erfindungsgemäßen Zusammensetzung, d.h. des erfindungsgemäßen Zuckermassensubstituts, handelt es sich um einen zum Verzehr geeigneten Bestandteil, mit dem ein Aufbauagglomerations-Partikelkollektiv hergestellt werden kann. Damit handelt es sich zum einen um ein Strukturelement des Aufbauagglomerations-Partikelkollektivs der erfindungsgemäßen Zusammensetzung. Zum anderen übernimmt der eine oder die mehreren Trägerstoff(e) eine Füllfunktion, mit der die Masse aber auch das Volumen von Zucker, insbesondere Saccharose, bei der Herstellung von Backwaren ersetzt werden kann.

In einer bevorzugten Ausführungsform der vorliegenden Erfindung sind die Trägerstoffe der erfindungsgemäßen Zusammensetzung im Vergleich zu Zucker bzw. Saccharose aufgrund ihres geringeren physiologischen Brennwertes niedrig- oder nicht-kalorische, nicht-kariogene Stoffe, die Masse bzw. Volumen verleihen und vorteilhaft gesündere Alternativen zu beispielsweise Zucker bzw. Saccharose bereitstellen, ohne die Nützlichkeit oder Funktionalität des damit herzustellenden Lebensmittels zu beeinträchtigen.

Der erfindungsgemäß einzusetzende Trägerstoff bzw. die erfindungsgemäß einzusetzenden Trägerstoffe wird/werden bevorzugt gewählt aus der Gruppe, die besteht aus
- unverdaulichen Fasern und Ballaststoffen, insbesondere
   unter physiologischen Bedingungen unlöslichen Ballaststoffen, insbesondere ausgewählt aus der Gruppe, die besteht aus: Cellulose, Hemicellulosen, Lichenin, Chitin, Chitosan, Ligninen, Xanthan, pflanzliche Fasern, insbesondere Getreidefasern, Kartoffelfasern, Apfelfasern, Citrusfasern, Bambusfasern, extrahierte Zuckerrübenfasern, Haferfasern; und
   unter physiologischen Bedingungen löslichen Ballaststoffen, insbesondere ausgewählt aus der Gruppe, die besteht aus: Inulin, insbesondere nativem Inulin, hochlöslichem Inulin, granuliertem Inulin, Hochleistungs-(high performance) Inulin, Pektine, Alginate, Agar, Carrageen, Gummi arabicum, Guarkernmehl, Johannisbrotkernmehl, Xanthan, Raffinose, Xylose, Polydextrose und Lactulose;
- Mehlen, insbesondere Mehlen aus Weizen (Weich- oder Durum-Weizen), Roggen, Hafer, Gerste, Emmer, Dinkel, Einkorn, Buchweizen, Hirse, Mais, Reis;
- Stärke, insbesondere Stärke aus Weizen, Kartoffeln, Mais, Reis, Tapioka und Hafer, modifizierte Stärke; und Stärkederivaten, z.B. Dextrinen oder Maltodextrinen, insbesondere Dextrinen und Maltodextrinen aus Weizen, Kartoffeln, Mais, Reis und Hafer, Cyclodextrine, Oligosacchariden, insbesondere Oligofructose; und
- Zuckeralkoholen, insbesondere Sorbit, Mannit, Isomalt, Maltit, Maltilol-Sirup, Lactit, Xylit, Erythrit;
oder Mischungen aus den vorgenannten Trägerstoffen.

Die mehreren Trägerstoff/Trägerstoffe sind besonders bevorzugt ausgewählt aus der Gruppe, die besteht aus unverdaulichen Fasern und Ballaststoffen, Mehlen, Stärke und Stärkederivaten und Zuckeralkoholen oder Mischungen aus den vorgenannten Trägerstoffen.

Unverdauliche Fasern und Ballaststoffe, meist Polysaccharide, kommen vorwiegend in pflanzlichen Lebensmitteln wie beispielsweise Getreide, Obst, Gemüse und Hülsenfrüchten vor. Ballaststoffe werden im Dünndarm weder signifikant verdaut noch absorbiert.

Inulin ist ein Gemisch von Polysacchariden aus Fructosebausteinen mit einer Kettenlänge von bis zu 100 Monomeren. Inulin zählt zu den unverdaulichen Lebensmitteln, welche im Dünndarm von den menschlichen Verdauungsenzymen nicht in signifikanten Mengen abgebaut werden können. Inulin kommt in der Natur vorwiegend als Speicherkohlenhydrat in Zichorienwurzeln, Weizen und Zwiebeln vor.

Polydextrose ist eine synthetische Verbindung aus Glucose, Sorbit und Zitronensäure. Durch die insulinunabhängige Verstoffwechselung hat Polydextrose keinen großen Einfluss auf den Blutzuckerspiegel. Polydextrose verfügt im Vergleich zu Zucker über keine nennenswerte eigene Süße.

Dextrine, auch Maltodextrine genannt, sind Stärkeabbauprodukte, die von ihrer Molekülgröße her zwischen Oligosacchariden und Stärke liegen und nach ihrem Abbaugrad (Dextrose-Äquivalent oder DE-Wert) unterschieden werden. Sie werden hauptsächlich aus Weizen-, Kartoffel- oder Maisstärke gewonnen. Dextrine bzw. Maltodextrine haben. Vorzugsweise kommen Maltodextrine mit einem DE-Wert von 7 bis 32 als Trägerstoff in der erfindungsgemäßen Zusammensetzung zum Einsatz.

Als Mehl wird in erster Linie das Pulver bezeichnet, das beim feinen Mahlen von Getreidekörnern entsteht. Mehl wird aus den Getreidearten Weizen (Weich- oder Durum-Weizen), Dinkel, Emmer, Einkorn, Buchweizen, Roggen, Hafer, Gerste, Hirse, Mais und Reis gewonnen.

Oligofructose ist wie Inulin ein Mehrfachzucker aus Fructosemolekülen. Die Herstellung erfolgt durch den teilweisen Abbau von Inulin. Dadurch besitzt Oligofructose eine mit < 10 Fructosemolekülen wesentlich kürzere Kettenlänge als Inulin, was zur Folge hat, dass dieser Stoff wesentlich süßer ist als Inulin. Da die Verdauungsenzyme sie nicht abbauen können, gehört sie zu den Ballaststoffen.

Extrahierte Zuckerrübenfasern sind ein Nebenprodukt aus der Zuckerrübenverarbeitung, bei der in einer Extraktionsanlage der Zucker enthaltende Rohsaft von den extrahierten Zuckerrübenschnitzeln abgetrennt wird.

Der erfindungsgemäß einzusetzende Trägerstoff wird bzw. die erfindungsgemäß einzusetzenden Trägerstoffe werden besonders bevorzugt gewählt aus der Gruppe, die besteht aus Maisdextrin, Polydextrose, nativem Inulin, löslichen Ballaststoffen aus Haferkorn, Weizenmehl, hochlöslichem Inulin, granuliertem Inulin, Hochleistungs-(high performance)Inulin, Oligofructose, resistenter Stärke, Oligofructose, Maltodextrin aus Mais, extrahierten Zuckerrübenfasern und Weizenmehl oder Mischungen aus den vorgenannten Trägerstoffen.

Noch mehr bevorzugt wird der erfindungsgemäß einzusetzende Trägerstoff bzw. werden die erfindungsgemäß einzusetzenden Trägerstoffe ausgewählt aus der Gruppe, die besteht aus PROMITOR 70 R (resistentes Maisdextrin), STA-LITE R90, (Polydextrose), Fibroline S20 (natives Inulin), Beta Glucan PromOat^{®} (lösliche Ballaststoffe aus Haferkorn), Weizendunst, Orafti HSI (hochlösliches Inulin), Orafti GR (granuliertes Inulin), Orafti HP (Hochleistungs-(high performance)Inulin), Inulin Frutalose^{®} SFP (Oligofructose), Inulin Frutafit^{®} (Inulin), Tapioca Maltodextrin (resistente Stärke), Oligofructose Orafti^{®} P95 (Oligofructose), Inulin Frutalose^{®} OFP (Oligofructose), Inulin Frutafit^{®} TEX (Inulin), Maltodextrin DE 8 (Maltodextrin aus Mais), Maltodextrin DE 17 - 20 (Maltodextrin aus Mais), Vidofibre BF W E (extrahierte Zuckerrübenfasern), Fibruline^{®} Instant (Inulin) und Weizenmehl (Weizenmehl Type 405) oder Mischungen aus den vorgenannten Trägerstoffen.

Die oben genannten Trägerstoffe zur Herstellung des Aufbauagglomerations-Partikelkollektivs der erfindungsgemäßen Zusammensetzung werden erfindungsgemäß entweder einzeln oder in Kombination miteinander als Mischung verwendet. Als besonders vorteilhaft hat sich erwiesen, wenn für die Zuckersubstitution bzw. für den Masseersatz von Zucker, insbesondere von Saccharose, zwei, drei oder vier der oben aufgeführten Trägerstoffe in Mischung miteinander verwendet werden. Durch die Kombination der Trägerstoffe lassen sich die unterschiedlichen Eigenschaften der einzelnen Trägerstoffe wie beispielsweise Süßkraft oder Masse bzw. Volumen in vorteilhafter Weise miteinander kombinieren, um so als Zuckersubstitut die Anforderungen an die Süße sowie die weiteren Backeigenschaften von Zucker, insbesondere Saccharose, annähernd zu erreichen, da kein der o.g. Trägerstoffe alleine alle Eigenschaften von Zucker, insbesondere Saccharose, annähernd besitzt.

Die besten Ergebnisse werden erzielt mit Kombinationen aus den Trägerstoffen Maltodextrin und/oder Inulin und/oder Weizenmehl, insbesondere Kombinationen aus den Trägerstoffen Maltodextrin DE 8 und/oder Inulin Frutafit^{®} IQ und/oder Inulin Orafti^{®} und/oder Weizenmehl.

Als besonders vorteilhaft hat sich erwiesen, wenn in der erfindungsgemäßen Zusammensetzung das Mischungsverhältnis der Trägerstoffe (i) Maltodextrin zu (ii) Inulin zu (iii) Weizenmehl im Bereich von (i) 0 bis 100 Gew.-% zu (ii) 0 bis 100 Gew.-% zu (iii) 0 bis 100 Gew.-% liegt, bezogen auf das Gesamtgewicht der Mischung der Trägerstoffe, insbesondere wenn das Mischungsverhältnis der Trägerstoffe (i) Maltodextrin zu (ii) Inulin zu (iii) Weizenmehl im Bereich von (i) 10 bis 80 Gew.-% zu (ii) 10 bis 80 Gew.-% zu (iii) 10 bis 80 Gew.-% liegt und noch mehr bevorzugt, wenn das Mischungsverhältnis der Trägerstoffe (i) Maltodextrin zu (ii) Inulin zu (iii) Weizenmehl im Bereich von (i) 15 bis 25 Gew.-% zu (ii) 15 bis 35 Gew.-% zu (iii) 50 bis 70 Gew.-% liegt.

Noch mehr bevorzugt sind Mischungen aus den Trägerstoffen, in denen das Mischungsverhältnis der Trägerstoffe (i) Maltodextrin DE 8 zu (ii) Inulin Frutafit^{®} IQ zu (iii) Inulin Orafti^{®} zu (iv) Weizenmehl im Bereich von (i) 15 bis 100 Gew.-% zu (ii) 15 bis 100 Gew.-% zu (iii) 15 bis 100 Gew.-% zu (iv) 15 bis 100 Gew.-% liegt.

Noch bevorzugter sind Mischungen aus den Trägerstoffen, in denen das Mischungsverhältnis der Trägerstoffe (i) Maltodextrin DE 8 zu (ii) Inulin Frutafit^{®} IQ zu (iii) Inulin Orafti^{®} zu (iv) Weizenmehl im Bereich von (i) 15 bis 55 Gew.-% zu (ii) 15 bis 40 Gew.-% zu (iii) 15 bis 55 Gew.-% zu (iv) 15 bis 45 Gew.-% liegt.

Gute Ergebnisse werden erzielt für die erfindungsgemäßen Zusammensetzungen, die die folgenden Trägerstoff-Mischungen umfassen, die als Masseersatz von Zucker verwendet werden:

**Tabelle 1: Zusammensetzungen von Trägerstoff-Mischungen.**

| Beispiel: | Maltodextrin DE 8 (Gew.-%) | Inulin Frutafit^{®} IQ (Gew.-%) | Inulin Orafti HSI (Gew.-%) | Weizenmehl (Gew.-%) |
|---|---|---|---|---|
| 1 | 26,33 | 21,54 | 25,20 | 26,93 |
| 2 | - | 46,08 | 53,92 | - |
| 3 | - | 35,27 | 20,63 | 44,09 |
| 4 | - | 17,12 | 40,07 | 42,81 |
| 5 | 41,13 | 16,82 | - | 42,05 |
| 6 | - | - | 65,18 | 34,82 |
| 7 | 100,00 | - | - | - |
| 8 | 26,33 | 21,54 | 25,20 | 26,93 |
| 9 | 51,10 | - | 48,90 | - |
| 10 | 26,33 | 21,54 | 25,20 | 26,93 |
| 11 | 20,16 | - | 38,60 | 41,24 |
| 12 | 26,79 | 21,92 | 51,29 | - |
| 13 | 26,33 | 21,54 | 25,20 | 26,93 |
| 14 | - | - | 100,00 | - |
| 15 | 55,01 | 44,99 | - | - |
| 16 | 66,17 | - | - | 33,83 |
| 17 | 26,33 | 21,54 | 25,20 | 26,93 |
| 18 | 26,33 | 21,54 | 25,20 | 26,93 |
| 19 | 43,54 | 35,62 | 20,84 | - |
| 20 | - | 100,00 | - | - |
| 21 | 34,75 | 14,21 | 33,26 | 17,77 |
| 22 | - | 61,54 | - | 38,46 |
| 23 | 39,98 | - | 19,13 | 40,88 |
| 24 | - | - | - | 100,00 |
| 25 | 17,94 | 29,36 | 34,35 | 18,35 |
| 26 | 21,36 | 34,95 | - | 43,69 |

Eine besonders bevorzugte und vorteilhafte Trägerstoff-Mischung hat die folgende relative Gewichtsverteilung: (i) Maltodextrin DE 8: 7,6 Gew.-%; (ii) Inulin Orafti^{®}: 6,2 Gew.-% und (iii) Weizenmehl: 35,2 Gew.-% in Bezug auf die Gesamtmasse des Aufbauagglomerations-Partikelkollektivs.

Vorzugsweise weist der erfindungsgemäß verwendete Trägerstoff eine Partikelgröße mit einem D50-Wert im Bereich von 5 bis 300 µm auf, besonders bevorzugt eine Partikelgröße mit einem D50-Wert im Bereich von 10 bis 300 µm, noch bevorzugter von 15 bis 100 µm, gemessen durch Laserbeugungsspektroskopie. Werden Trägerstoffe mit einer Partikelgröße mit einem deutlich niedrigeren D50-Wert als 5 µm zur Herstellung des Aufbauagglomerations-Partikelkollektivs der erfindungsgemäßen Zusammensetzung verwendet, werden verstärkt Verklumpungen bei der Agglomeration beobachtet und die elektrostatischen Kräfte werden in der Art und Weise verändert, dass sie die Haftungskräfte im Aufbauagglomerat verändern. Dies ist unerwünscht, da somit das resultierende Aufbauagglomerations-Partikelkollektiv der erfindungsgemäßen Zusammensetzung nicht frei fließend ist.

### Bestandteil (b) - ein oder mehrere Fett(e) oder Öl(e)

Um ein Partikelkollektiv herzustellen, ist ein Benetzungsmittel erforderlich, damit die einzelnen Bestandteile der erfindungsgemäßen Zusammensetzung, d.h. des erfindungsgemäßen Zuckermassensubstituts, aneinanderhaften. Wie bereits oben beschrieben, sind die am stärksten wirkenden Haftkräfte innerhalb eines Agglomerates die Flüssigkeitsbrücken. Diese Bindungsart beruht vorwiegend auf dem Kapillardruck innerhalb der Flüssigkeitsbrücken. Um diese Kräfte bei der Herstellung des Partikelkollektivs der erfindungsgemäßen Zusammensetzung zu nutzen, werden die Trägerstoffe mit einer Flüssigkeit benetzt. Um die Trägerstoffe vollständig zu umschließen, sollte die eingesetzte Flüssigkeit eine gute Benetzungsfähigkeit besitzen.

Flüssige Stoffe mit guter Benetzungsfähigkeit sind ausgewählt aus der Gruppe, die besteht aus Wasser, Triacetin, Propylenglykol, Diacetin, Glycerin, Fett und Öl.

Als vorteilhaft bei der Herstellung eines Aufbauagglomerations-Partikelkollektivs der erfindungsgemäßen Zusammensetzung hat sich die Verwendung eines Fettes oder Öls oder die Verwendung mehrerer Fette oder Öle erwiesen. Das erfindungsgemäß verwendete Fett oder Öl bzw. die verwendeten Fette oder Öle zeichnen sich dadurch aus, dass sie aufgrund ihrer spreitenden Eigenschaft - im Vergleich beispielsweise zu Wasser - zum einen eine hervorragende Benetzungsfähigkeit auf der Oberfläche der Trägerstoffe gewährleisten. Zum anderen muss kein Aushärten des Partikelkollektivs bzw. des Agglomerats durch beispielsweise Trocknung erfolgen, da die Flüssigkeitsbrücken für einen längeren Zeitraum bestehen bleiben. Somit wird sichergestellt, dass die Agglomerate nach der Herstellung nicht zerfallen. Die Verwendung eines Fettes oder Öls/mehrerer Fette oder Öle hat darüber hinaus den weiteren Vorteil, dass sich während der Bildung des Partikelkollektivs keine Klumpen bilden.

Das in der erfindungsgemäßen Zusammensetzung verwendete Fett oder Öl bzw. die verwendeten Fette oder Öle ist/sind aus der Gruppe der zum Verzehr geeigneten Fette oder Öle gewählt und dient/dienen dazu, den Trägerstoff der erfindungsgemäßen Zusammensetzung zu benetzen, so dass der kristalline oder teilkristalline Zucker, insbesondere die kristalline oder teilkristalline Saccharose, der erfindungsgemäßen Zusammensetzung bei der Bildung des Aufbauagglomerations-Partikelkollektivs auf der Oberfläche des Trägerstoffs anhaften kann.

Nach ihrem Aggregatzustand bei 20 °C unterscheidet man herkömmlicherweise die Fette von den Ölen. Fette oder Öle sind Stoffgemische aus Fettsäuretriglyceriden, die bei Raumtemperatur fest oder flüssig sind. Ein niedriger Schmelzbereich wird hauptsächlich durch einen hohen Anteil an ungesättigten oder mehrfach ungesättigte Fettsäuren verursacht. Bevorzugt ist/sind die eine oder mehreren Fette(n) oder Öl(e) ausgewählt aus Triglyceriden mit gesättigten oder ungesättigten C4- bis C18-Fettsäureresten, insbesondere mit gesättigten oder ungesättigten C8- bis C10-Fettsäureresten.

Unter Fett wird im Sinne der vorliegenden Erfindung ein Triglycerid mit geringen Anteilen an Acyllipiden und einem unverseifbaren Anteil, insbesondere mit gleichen oder verschiedenen gesättigten oder ungesättigten C4- bis C18-Fettsäureresten, verstanden. Als Fette eignen sich erfindungsgemäß bevorzugt Milchfett, Kokosfett, Kakaobutter, Palmkernfett, Schweinefett, Rinderfett oder gehärtete pflanzliche Fette. Von den genannten Fetten sind Milch- und Kokosfett ganz besonders bevorzugt.

Unter Öl wird im Sinne der vorliegenden Erfindung ein Triglycerid, insbesondere mit gleichen oder verschiedenen gesättigten oder ungesättigten C4-bis C18-Fettsäureresten, verstanden. Als Öle eignen sich erfindungsgemäß bevorzugt Triglyceride mit gesättigten oder ungesättigten C8- bis C10-Fettsäureresten, insbesondere Speiseöle, weiter bevorzugt Pflanzenöle. Geeignete Öle werden besonders bevorzugt ausgewählt aus der Gruppe, die besteht aus Borretschöl, Distelöl, Erdnussöl, Haselnussöl, Kokosöl, Leinöl, Maiskeimöl, Makadamianussöl, Mandelöl, Olivenöl, Palmöl, Pekannussöl, Pistazienkernöl, Rapsöl, Reiskeimöl, Sesamöl, Sojaöl, Sonnenblumenöl, Walnussöl, Arganöl und Weizenkeimöl. Von den genannten Pflanzenölen sind, Sonnenblumenöl, Rapsöl, oder Sojaöl. ganz besonders bevorzugt.

In einer weiteren erfindungsgemäß bevorzugten Ausführungsform werden fraktionierte Pflanzenöle verwendet, die hauptsächlich gesättigte und ungesättigte C6- bis C10-Fettsäurereste aufweisen. Besonders geeignet sind die (weitgehend) geschmacksneutralen Triglyceride mit gleichen oder verschiedenen gesättigten oder ungesättigten C6- bis C10-Fettsäureresten (sogenannte MCT-Öle; medium chain triglycerides), die hervorragende spreitende und benetzende Eigenschaften aufweisen. Ferner haben die MCT-Öle den Vorteil, dass sie nicht hygroskopisch sind und nicht zu unerwünschter Agglomeration des Aufbauagglomerations-Partikelkollektivs der erfindungsgemäßen Zusammensetzung führen. Ferner sind diese besonders bevorzugt wegen der spreitenden Eigenschaften.

### Bestandteil (c) - kristalliner oder teilkristalline Zucker, insbesondere kristalline oder teilkristalline Saccharose

Der in der erfindungsgemäßen Zusammensetzung, d.h. in dem Zuckermassensubstitut, verwendete kristalline oder teilkristalline Zucker ist ein süßes, in kristalliner oder teilkristalliner Form vorliegendes Kohlenhydrat (Mono-, Di- oder Trisaccharid), das üblicherweise als Süßungsmittel bei der Herstellung von Nahrungsmitteln verwendet wird. Im Kontext der vorliegenden Erfindung umfasst der Begriff "kristalliner oder teilkristalliner Zucker" alle süß schmeckenden und in zumindest teilweise kristalliner Form vorliegenden Mono-, Di-, Tri-, sowie Oligosaccharide, insbesondere ausgewählt aus der Gruppe Glucose (D-Glucose), Fructose (D-Fructose), Mannose, Galactose (D-Galactose), Maltose, Lactose, Saccharose, Trehalose, Cellobiose, Gentiobiose, Raffinose, und Psicose (Allulose).

In einer alternativen Variante kann das Aufbauagglomerations-Partikelkollektiv einer alternativen Zusammensetzung anstelle des kristallinen oder teilkristallinen Zuckers als Bestandteil (c) unter Verwendung eines kristallinen oder teilkristallinen Süßstoffes, wie sie nachfolgend hierin definiert werden, insbesondere kristallinem oder teilkristallinem Saccharin oder kristalliner oder teilkristalliner Sucralose, bereitgestellt werden.

Die Herstellung von Psicose (Allulose) erfolgt durch eine chemische Modifizierung von Fructose. Psicose besitzt eine relative Süße gegenüber einer gleichkonzentrierten Saccharose von etwa 0,7. Psicose ist in die Liste der Lebensmittel aufgenommen worden, die von der US Food and Drug Administration unter dem Status "Allgemein anerkannt als sicher" eingestuft werden. In der EU ist aktuell Psicose noch nicht zugelassen.

Der/die bei der Herstellung der erfindungsgemäßen Zusammensetzung verwendete Zucker, insbesondere Saccharose, wird in kristalliner oder teilkristalliner Form, d. h. in Form von Zuckerkristallen oder im teilkristallinen festen Aggregatzustand, und nicht in rein amorpher Form verwendet. Bevorzugt wird eine rein kristalline Form verwendet. Kristallin im Rahmen der vorliegenden Erfindung bedeutet, dass die Zucker-Substanzen unter einem geeigneten Analyseverfahren, z.B. unter monochromatischer Bestrahlung mit Röntgenlicht, sich anisotrop verhalten und definierte Beugungsmuster hervorrufen. Die kristalline bzw. teilkristalline Form des Zuckers, vorteilhafterweise in Form eines kristallinen oder teilkristallinen Trockenproduktes, trägt wesentlich zur Erlangung der Backeigenschaften, insbesondere zur Erlangung der Gebäcktextur, bei der Verwendung der erfindungsgemäßen Zusammensetzung in Backwaren bei.

Besonders bevorzugt wird bei der Herstellung des Aufbauagglomerations-Partikelkollektivs der erfindungsgemäßen Zusammensetzung kristalline oder teilkristalline Saccharose verwendet. Die erfindungsgemäß eingesetzte kristalline oder teilkristalline Saccharose kann unterschiedlicher Herkunft sein, beispielsweise aus Zuckerrüben, Zuckerrohr oder Zuckerpalme und wird durch an sich übliche Raffinationsprozesse teilraffiniert (insbesondere handelsüblicher brauner Zucker) oder vorzugsweise auf eine Reinheit von mindestens 90 % (z.B. Vollrohrzucker), bevorzugt mindestens 95 % (z.B. Rübenrohrzucker), vorzugsweise größer 97 % (z.B. Farinzucker), besonders bevorzugt > 99 % (Weißzucker) und vorzugsweise auf einen Kristallinitätsgrad von > 98 % gebracht.

Kristalliner oder teilkristalliner Zucker, insbesondere kristalline oder teilkristalline Saccharose, ist in unterschiedlichen Körnungen kommerziell verfügbar. Im Bedarfsfalle kann die Partikelgröße und bevorzugte Partikelgrößenverteilung durch Mahlen und Sieben eingestellt werden. Bevorzugt weist der verwendete Gesamt-Zucker in der erfindungsgemäßen Zusammensetzung eine Partikelgröße mit einem D50-Wert im Bereich von 10 bis 300 µm auf, bevorzugt im Bereich von 12 bis 280 µm.

In einer alternativen Variante weist der verwendete kristalline oder teilkristalline Zucker in der erfindungsgemäßen Zusammensetzung zwei unterschiedliche Körnungen auf: Der kristalline oder teilkristalline Hauptzucker (der innere Zucker im Agglomerat) hat eine Partikelgröße mit einem D50-Wert im Bereich von 100 bis 300 µm auf, bevorzugt im Bereich von 220 bis 280 µm. Kleinere kristalline oder teilkristalline Hauptzucker-Partikelgrößen sind ebenfalls bevorzugt, um hochporöse Aufbauagglomerations-Partikelkollektive zu erhalten, vorzugsweise mit D50-Werte im Bereich von 50 bis 100 µm.

Der weitere kristalline oder teilkristalline Zucker (Außenzucker), vorzugsweise in Form von Puderzucker im Agglomerat, der auf der Oberfläche des Aufbauagglomerations-Partikelkollektivs haftet und dessen Partikelgröße kleiner ist als die Partikelgröße des kristallinen oder teilkristallinen Hauptzuckers, weist eine Partikelgröße mit einem D50-Wert im Bereich von 10 bis 50 µm, bevorzugt im Bereich von 12 bis 30 µm, auf.

Kleinere kristalline oder teilkristalline Zuckerpartikel sind allgemein schlecht benetzbar und neigen generell während des Agglomerationsprozesses zu elektrostatischen Wechselwirkungen untereinander, wodurch die Bildung von Agglomeraten nachteilig beeinflusst wird und somit der Agglomerationsvorgang erschwert wird. Dieser Nachteil wird mit dem erfindungsgemäßen Aufbauverfahren behoben. Zudem kann der äußere kristalline oder teilkristalline Puderzucker aufgrund der Porenstruktur im Agglomerat und der hohen Oberflächenaktivität den Ausfall in der Süße durch die geringere Menge an kalorisch wirksamen Zucker ausgleichen. Somit entsteht ein Zuckersubstitut, das sowohl im Volumen und der Textur, aber auch in der Süße einer Zusammensetzung mit deutlich höherem Zuckeranteil gleichkommt.

Der kristalline oder teilkristalline Hauptzucker, insbesondere die kristalline oder teilkristalline Saccharose, wird bei der Herstellung des Aufbauagglomerations-Partikelkollektivs der erfindungsgemäßen Zusammensetzung auf die Oberfläche des mit dem Öl oder Fett überzogenen Trägerstoffs aufgebracht. Durch die Aufbringung des kristallinen oder teilkristallinen Zuckers, insbesondere der kristallinen oder teilkristallinen Saccharose, auf die Oberfläche des mit Fett oder Öl überzogenen Trägerstoffs lässt sich ein Aufbauagglomerations-Partikelkollektiv bzw. ein Aufbauagglomerat der erfindungsgemäßen Zusammensetzung herstellen, dessen Struktur die Form einer Brombeere aufweise, wie dies beispielhaft in Figur 1 gezeigt ist.

### Optionaler Bestandteil (d) - eine oder mehrere sensorisch aktive Substanz(en)

In einer weiteren Variante gemäß dem ersten Aspekt der vorliegenden Erfindung umfasst oder besteht die erfindungsgemäße Zusammensetzung, d.h. das erfindungsgemäße Zuckermassensubstitut, optional eine oder mehrere sensorisch aktive Substanz(en), die ausgewählt ist/sind aus der Gruppe, die besteht aus süßenden Lebensmitteln, Süßstoffen, Aromastoffen und Geschmacksmodulatoren. Mit dem Zusatz einer oder mehreren der vorgenannten Substanz(en) lassen sich das Geschmacks- bzw. das Aromaprofil der erfindungsgemäßen Zusammensetzung modifizieren oder ausbalancieren.

Mit der Verwendung von einem oder mehreren süßenden Lebensmittel(n) als sensorisch aktive Substanz kann in der erfindungsgemäßen Zusammensetzung ein Süßeindruck erzeugt werden. Die in der erfindungsgemäß verwendeten Zusammensetzung verwendeten süßenden Lebensmittel sind vorzugsweise ausgewählt aus der Gruppe bestehend aus: flüssige oder trockene Konzentrate, bevorzugt Pulver, von Süßmolke, Süßkartoffel, Honig, Agave, Akazie, Fruchtdicksäften, insbesondere aus Banane, Weintraube, Apfel, Aprikose, Dattel, Zuckerrübensirup und Milchzucker.

Mit dem Zusatz von Süßstoffen in der erfindungsgemäßen Zusammensetzung lässt sich beispielweise eine geringere Süßkraft der Trägerstoffe - im Vergleich zu Zucker - kompensieren. Darüber hinaus lässt sich beispielsweise mit dem Zusatz von bitteren Geschmack maskierenden Substanzen der bittere (Nach-)-Geschmack von Süßstoffen verringern.

Der Begriff "Süßstoffe" bezeichnet hierbei Stoffe mit einer relativen Süßkraft von zumindest 25, bezogen auf die Süßkraft von Saccharose (welches somit die Süßkraft 1 hat). Vorzugsweise sind in der erfindungsgemäßen Zusammensetzung einzusetzende Süßstoffe nicht-kariogen und/oder besitzen einen Energiegehalt von maximal 5 kcal pro Gramm der erfindungsgemäßen Zusammensetzung.

Vorteilhafte Süßstoffe in einer bevorzugten erfindungsgemäßen Zusammensetzung sind ausgewählt aus den folgenden Gruppen (a1) und (a2):
(a1) natürlich vorkommende Süßstoffe, vorzugsweise ausgewählt aus der Gruppe bestehend aus
(a1-1) Miraculin, Monellin, Mabinlin, Thaumatin, Curculin, Brazzein, Pentaidin, D-Phenylalanin, D-Tryptophan, Glycin, D-Threonin, D-Serin und aus natürlichen Quellen gewonnene Extrakte oder Fraktionen, enthaltend diese Aminosäuren und/oder Proteine, und den physiologisch akzeptablen Salzen dieser Aminosäuren und/oder Proteine, insbesondere den Natrium-, Kalium-, Calcium oder Ammoniumsalzen;
(a1-2) Neohesperidindihydrochalkon, Naringindihydrochalkon, Steviosid, Steviolbiosid, Rebaudiosiden, insbesondere Rebaudiosid A, Rebaudiosid B, Rebaudiosid C, Rebaudiosid D, Rebaudiosid E, Rebaudiosid F, Rebaudiosid G, Rebaudiosid H, Rabaudiosid M, Rebaudiosid N, Rebaudiosid O, Rebaudiosid P, Rebaudiosid R, Rebaudiosid X, Rebaudiosid Z, Dulcosiden und Rubusosid, Suaviosid A, Suaviosid B, Suaviosid G, Suaviosid H, Suaviosid I, Suaviosid J, Baiyunosid 1, Baiyunosid 2, Phlomisosid 1, Phlomisosid 2, Phlomisosid 3 und Phlomisosid 4, Abrusosid A, Abrusosid B, Abrusosid C, Abrusosid D, Cyclocaryosid A und Cyclocaryosid I, Osladin, Polypodosid A, Strogin 1, Strogin 2, Strogin 4, Selligueain A, Dihydroquercetin-3-acetat, Perillartin, Telosmosid A₁₅, Periandrin I-V, Pterocaryosiden, Cyclocaryosiden, Mukuroziosiden, trans-Anethol, Bryosiden, Bryonosiden, Bryonodulcosiden, Carnosiflosiden, Scandenosiden, Gypenosiden, Trilobatin, Phloridzin, Dihydroflavanolen, Hematoxylin, Cyanin, Chlorogensäure, Albiziasaponin, Telosmosiden, Gaudichaudiosid, Mogrosiden, Mogrosid V, Hernandulcinen, Monatin, Phyllodulcin, Glycyrrhetinsäure und deren Derivate, insbesondere deren Glycosiden wie Glycyrrhizin, und den physiologisch akzeptablen Salzen dieser Verbindungen, insbesondere den Natrium-, Kalium-, Calcium oder Ammoniumsalzen;
(a1-3) Extrakten oder angereicherte Fraktionen der Extrakte, ausgewählt aus der Gruppe bestehend aus Thaumatococcus-Extrakten (Katemfestaude), Extrakten aus *Stevia* ssp. (insbesondere *Stevia rebaudiana),* Swingle-Extrakten *(Momordica* oder *Siratia grosvenorii,* Luo-Han-Guo), Extrakten aus *Glycerrhyzia* ssp. (insbesondere *Glycerrhyzia glabra),* Extrakten aus *Rubus* ssp. (insbesondere *Rubus suavissimus),* Citrus-Extrakten und Extrakten aus *Lippia dulcis;* und
(a2) synthetische süß schmeckende Stoffe, vorzugsweise ausgewählt aus der Gruppe bestehend aus Magap, Natriumcyclamat oder anderen physiologisch akzeptablen Salzen der Cyclamsäure, Acesulfam K oder anderen physiologisch akzeptablen Salzen des Acesulfams, Neohesperidindihydrochalkon, Naringindihydrochalkon, Saccharin, Saccharin-Natriumsalz, Aspartam, Superaspartam, Neotam, Alitam, Advantam, Perillartin, Monellin, Sucralose, Lugdunam, Carrelam, Sucrononat und Sucrooctat.

In einer weiteren Ausgestaltung der vorliegenden Erfindung wird in der erfindungsgemäßen Zusammensetzung optional wenigstens ein Aromastoff, insbesondere ein Aroma, verwendet, um die erfindungsgemäße Zusammensetzung zu aromatisieren. Das Aroma kann dabei fest oder flüssig sein.

In einer bevorzugten Ausführungsform umfasst die erfindungsgemäße Zusammensetzung ein Aroma, um den Geschmack und/oder Geruch der Zusammensetzung abzurunden und/oder zu verfeinern. Geeignete Aromen werden bevorzugt ausgewählt aus der Gruppe bestehend aus synthetischen, natürlichen oder naturidentischen Aroma-, Riech- und Geschmacksstoffen und deren Gemische, ätherischen Ölen, Reaktionsaromen, Raucharomen oder andere aromagebende Zubereitungen. Dabei kann es sich weiterhin vorzugsweise um Protein[teil]hydrolysate, Grillaromen, Pflanzenextrakte, Gewürze, Gewürzzubereitungen, Gemüse und/oder Gemüsezubereitungen handeln, die ferner geeignete Hilfs- und Trägerstoffe enthalten können. Insbesondere sind erfindungsgemäß bevorzugt Aromen oder deren Bestandteile geeignet, die einen röstigen, fleischigen (insbesondere Huhn, Fisch, Meerestiere, Rind, Schwein, Lamm, Schaf, Ziege), gemüsigen (insbesondere Tomate, Zwiebel, Knoblauch, Sellerie, Lauch, Pilze, Auberginen, Seetang), einen würzigen (insbesondere schwarzer und weißer Pfeffer, Chili, Paprika, Kardamom, Muskat, Piment, Senf und Senf-Produkte), gebratenen, hefigen, gesottenen, fettigen, salzigen und/oder scharfen Aromaeindruck verursachen und somit einen würzigen und salzigen Eindruck verstärken können.

Ätherische Öle, die erfindungsgemäß Bestandteil des Aromas sein können, werden vorzugsweise gewählt aus der Gruppe bestehend aus Anisöl; Baldrianöl; Basilikumöl; Beifußöl; Bergamotteöl; Bittermandelöl; Bohnenkrautöl; Buccoblätteröl; Campheröl; Canangaöl; Cardamomenöl; Cascarillaöl; Cassiaöl; Citronellöl; Citronenöl; Corianderöl; Cuminöl; Dillkrautöl; Dillsamenöl; Estragonöl; Eucalyptuscitriodora-Öl; Eucalyptusöl; Fenchelöl; Grapefruitöl; Ingweröl; Kamillenöl blau; Kamillenöl römisch; Krauseminzöl; Kümmelöl; Lemongrasöl; Liebstocköl; Limettenöl destilliert; Limettenöl gepresst; Lorbeerblätteröl; Macisöl; Majoranöl; Mandarinenöl; Muskatnußöl; Nelkenblätteröl; Nelkenblütenöl; Orangenöl; Origanumöl; Petersilienblätteröl; Petersiliensamenöl; Pfefferminzöl; Pfefferöl; Pimentöl; Rosmarinöl; Salbeiöl dalmatinisch; Salbeiöl spanisch; Selleriesamenöl; Sternanisöl; Thymianöl; Vanilleextrakt; Wacholderbeeröl; Wintergrünöl; Zimtblätteröl; Zimtrindenöl sowie Fraktionen davon.

Im Rahmen der vorliegenden Erfindung werden vorzugsweise auch Reaktionsaromen verwendet, die Bestandteil des Aromas sein können, die durch Bratung eines Gewürzes oder eines Tresters hergestellt werden können, sind vorzugsweise ausgewählt aus der Gruppe, die besteht aus Aromen aus Bratung von pflanzlichen Ölen mit Kartoffeln, Süßkartoffeln, Karottentrestern, Zwiebeltrestern, Zuckerrübentrestern, Gemüsetrestern, Fruchttrester oder Pilztrestern.

Im Rahmen der vorliegenden Erfindung werden bevorzugt einzusetzende Einzel-Aromastoffe ausgewählt aus der Gruppe bestehend aus: Acetaldehyd, Acethylmethylcarbinol, Acetophenon, Allylcapronat, alpha lonon, beta lonon, Anisaldehyd, Anisylacetat, Anisylformiat, Benzaldehyd, Benzothiazol, Benzylacetat, Benzylacetat, Benzylalkohol, Benzylbenzoat, beta Ionon, Butylbutyrat, Butylcapronat, Butylidenphthalid, Caprinsäure, Capronsäure, Caprylsäure, Carvon, Camphen Caryophyllen, Cineol, Cinnamylacetat, Citral, Citronellol, Citronellal, Citronellylacetat, Cyclohexylacetat, Cymol, Damascon, Decalacton, Diacetyl, Dihydrocumarin, Dimethylanthranilat, Dimethylanthranilat, Dodecalacton, Ethoxyethylacetat, Ethylacetat, Ethylbuttersäure, Ethylbutyrat, Ethylcaprinat, Ethylcapronat, Ethylcrotonat, Ethylformiat, Ethylfuraneol, Ethylguajakol, Ethylisobutyrat, Ethylisovalerianat, Ethyllactat, Ethyllactat, Ethylmaltol, Ethylmethylbutyrat, Ethylpropionat, Eucalyptol, Eugenol, Ethylheptylat, 1-(4'-Hydroxyphenyl)-2-butanon (Frambinor^{®}), gamma-Decalacton, Geraniol, Geranylacetat, Geranylacetat, Grapefruitaldehyd, Methyldihydrojasmonat (Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cic-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Maltol, I-Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans,2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (3-Ethoxy-4-isobutyryloxybenzaldehyd), Furaneol^{®}(2,5-Dimethyl-4-hydroxy-3(2H)-furanon) und dessen Abkömmlinge (dabei vorzugsweise Homofuraneol (2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalalcton), delta-Lactone (vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)-furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)-furan, 2-Methyl-3-furanthiol, Bis(2-methyl-3-furyl)-disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, Mercapto-3-methyl-1-butanol 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 2,3-Butandion, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Dimethylsulfid, Trimethylamin, Zimtaldehyd, Zimtalkohol, Methylsalicylat, Isopulegol sowie - soweit möglich - deren cis/trans-Isomere, Stereoisomere, Enantiomere, Diastereomere und Epimere.

Darüber hinaus können die erfindungsgemäßen verwendeten Aromen solche sein, die vorzugsweise ausgewählt sind aus der Gruppe, die besteht aus Ei, Butter, Röstnoten, Karamell und Popcorn.

Bevorzugt enthalten die erfindungsgemäß einzusetzenden Aromen mehr als einen der genannten Aromastoffe, vorzugsweise zwei, drei, vier, fünf oder mehr der genannten Aromastoffe.

In einer weiteren Ausgestaltung der vorliegenden Erfindung wird in der erfindungsgemäßen Zusammensetzung optional wenigstens ein Geschmacksmodulator verwendet. Geschmacksmodulatoren sind solche Substanzen, die in der Lage sind, einen unangenehmen (bitteren, metallischen, kalkigen, sauren, adstringierenden, scharfen) Geschmackseindruck zu maskieren oder zu vermindern, einen angenehmen Geschmackseindrucks (süß, salzig, Umami oder kribbelnder (tingling) oder kühlender Effekt) zu verstärken oder zu erzeugen oder einen Geschmackseindruck zu korrigieren. Damit lässt sich eine Modulation des Geschmacks der erfindungsgemäßen Zusammensetzung erreichen.

Diese weiteren, sensorisch aktiven Substanzen bzw. modulierenden Aroma- und/oder Geschmacksstoffe (Geschmacksmodulatoren) können aus den folgenden Listen ausgewählt werden, ohne die Erfindung einzuschränken:

Trans-tert-Butylcyclohexanol, wie beschrieben in WO 2009/087242); Mononatriumglutamat, Glutaminsäure; Nucleotide, wie zum Beispiel Adenosin-5'-monophosphat, Cytidin-5'-monophosphat, Inosin-5'-monophosphat, Guanosin-5'-monophosphat und deren pharmazeutisch akzeptable Salze; Lactisole; Natriumsalze, wie zum Beispiel Natriumchlorid, Natriumlactat, Natriumcitrat, Natriumacetat, Natriumgluconat; Hydroxyflavanone, wie zum Beispiel Eriodictyol, Sterubin (Eriodictyol-7-methylether), Homoeriodictyol und deren Natrium-, Kalium-, Calcium-, Magnesium- oder Zinksalze (insbesondere solche, wie beschrieben in EP 1 258 200); Hydroxybenzoesäureamide, wie zum Beispiel 2,4-Dihydroxybenzoesäurevanillylamid, 2,4-Dihydroxybenzoesäure-N-(4-hydroxy-3-methoxybenzyl)-amid, 2,4,6-Trihydroxybenzoesäure-N-(4-hydroxy-3-methoxybenzyl)-amid, 2-Hydroxybenzoesäure-N-4-(hydroxy-3-methoxybenzyl)-amid, 4-Hydroxybenzoesäure-N-(4-hydroxy-3-methoxybenzyl)-amid, 2,4-Dihydroxybenzoesäure-N-(4-hydroxy-3-methoxybenzyl)-amid-mono-natriumsalz, 2,4-Dihydroxybenzoesäure-N-2-(4-hydroxy-3-methoxyphenyl)-ethylam id, 2,4-Dihydroxybenzoesäure-N-(4-hydroxy-3-ethoxybenzyl)-amid, 2,4-Dihydroxybenzoesäure-N-(3,4-dihydroxybenzyl)-amid und 2-Hydroxy-5-methoxy-N-[2-(4-hydroxy-3-methoxyphenyl)-ethyl]-amid); 4-Hydroxybenzoesäurevanillylamid (insbesondere solche, wie beschrieben in WO 2006/024587); Hydroxydeoxybenzoine, wie zum Beispiel 2-(4-Hydroxy-3-methoxyphenyl)-1-(2,4,6-trihydroxyphenyl)-ethanon, 1-(2,4-Dihydroxyphenyl)-2-(4-hydroxy-3-methoxy-phenyl)-ethanon, 1-(2-Hydroxy-4-methoxyphenyl)-2-(4-hydroxy-3-methoxyphenyl)-ethanon) (insbesondere solche, wie beschrieben in WO 2006/106023); Hydroxyphenylalkandione, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche, wie beschrieben in WO 2007/003527); Diacetyltrimere (insbesondere solche, wie beschrieben in WO 2006/058893); gamma-Aminobuttersäuren (insbesondere solche, wie beschrieben in WO 2005/096841); Divanilline (insbesondere solche, wie beschrieben in WO 2004/078302); 4-Hydroxydihydrochalkone (insbesondere solche, wie beschrieben in US 2008 0227867); in diesem Zusammenhang insbesondere Phloretin und Davidigenin; Aminosäuren oder Mischungen von Molkeproteinen mit Lecithinen, Hefeextrakte, Pflanzenhydrolysate, pulverisierte Gemüse (z.B. Zwiebelpulver, Tomatenpulver), Pflanzenextrakte (z.B. von Liebstöckel oder von Pilzen wie Shiitake), Meeralgen und Mineralsalzmischungen sowie Mischungen (insbesondere solche, wie beschrieben in WO 2007/045566); Hesperetin (insbesondere solche, wie offenbart in WO 2007/014879); 4-Hydrochalkone (insbesondere solche, wie offenbart in WO 2007/107596); Propylenphenylglycoside (Chavicolglycoside) (insbesondere solche, wie beschrieben in EP 1 955 601); Pellitorin und davon abgeleitete Aromazusammensetzungen; Umami-Verbindungen (insbesondere solche, wie beschrieben in WO 2008/046895 und EP 1 989 944); Matairesinol und Neoflavanoide (insbesondere solche, wie beschrieben in WO 2012/146584, US 2013 078192 und US 2013 084252); und Neoisoflavonoide (insbesondere solche, wie beschrieben in EP 2 570 035, EP 2 570 036 und EP 2 726 026), Extrakte aus Mycetia ssp. oder Balansine, wie in EP 2 529 633 B1 beschrieben, Hesperetindihydrochalkon wie in WO 2017 186,299 beschrieben, Mischungen, enthaltend Naringenin und Phloretin wie in WO 2017 092,796 bechriebn, native oder transglycosidierte Rubusoside wie in EP 2 386 211 B1 oder WO 2015 189,346, Flavane wie in US 2010 292,175 beschrieben, Phyllodulcin oder Hydrangea-Extrakte wie in EP 2,298,084 beschrieben, Dihydrochaklkone wie in EP 2,353,403 beschrieben, Homovanillinsäureester wie in EP2,932,858 beschrieben, Phyllodulcinabbauprodukte wie in PCT/EP2017/065457 beschrieben.

Bicyclo[4.1.0]heptan-7-carbonsäureamide, insbesondere solche, wie beschrieben in EP 2 079 322 (Symrise); Cyclopropancarbonsäure(3-methylcyclohexyl)-amide, insbesondere solche, wie beschrieben in EP 1 989 944 (Symrise); aromatische Neo-Menthylamide, insbesondere solche, wie beschrieben in EP 2 064 959 (Symrise); Neo-Menthylamide, insbesondere solche, wie beschrieben in US 2009 311401 (Symrise); Geranylaminderivate der Oxalsäure sowie Neomenthylderivate.

Generell ist der bzw. sind die zwei, drei, mehreren oder sämtliche der weiteren Geschmacksstoffe zum Vermitteln, Modifizieren und/oder Verstärken einer, zwei oder sämtlicher der Geschmackseindrücke Umami, Kokumi und salzig (Geschmacksmodulatoren) vorzugsweise natürlich vorkommende Verbindungen, besonders bevorzugt Verbindungen ausgewählt aus der Gruppe bestehend aus: Mononatriumglutamat, freie Glutaminsäure, Nucleotide, wie zum Beispiels Adenosin-5'-monophosphat, Cytidin-5'-monophosphat, Inosin-5'-monophosphat, Guanosin-5'-monophosphat) und deren pharmazeutisch akzeptable Salze; Strombine (insbesondere solche, wie beschrieben in WO 2010/100589); Theogalline (insbesondere solche, wie beschrieben in JP 2007 110988); Pyridin-Betain-Verbindungen (insbesondere solche, wie beschreiben in EP 1 291 342); Glutaminsäureglycoside (insbesondere solche, wie beschrieben in WO 2002/087361); Äpfelsäureglycoside (insbesondere solche, wie beschrieben in WO 2006/003107); Glutathion-Derivate (insbesondere solche, wie beschrieben in EP 0 181 421 oder WO 2007/042273); Lactisole und Alkylpyridine (insbesondere solche Alkylpyridine, wie beschrieben in WO 2009/122318 und WO 2009/1223319), insbesondere 2-Hexyl-, 2-Heptyl- und 2-Octylpyridin, (2E,6Z)-N-cyclopropylnona-2,6-dienamid, (2E,6Z)-N-ethylnona-2,6-dienamid, N-[(2E)-3,7-dimethylocta-2,6-dienyl]-cyclopropancarboxamid, N'-[(2-methoxy-4-methyl-phenyl)methyl]-N-[2-(5-methyl-2-pyridyl)ethyl]-oxamid, N'-[(2,4-dimethoxyphenyl)-methyl]-N-[2-(2-pyridyl)-ethyl]-oxamid, N'-[(2-methoxy-4-methyl-phenyl)-methyl]-N-[2-(2-pyridyl)-ethyl]-oxamid, N-(1-propylbutyl)-1,3-benzodioxol-5-carboxamid, 1-(2-hydroxy-4-isobutoxy-phenyl)-3-(2-pyridyl)-propan-1-on und 1-(2-hydroxy-4-methoxy-phenyl)-3-(2-pyridyl)-propan-1-on; Zimtsäureamide, insbesondere Rubemamid oder Rubescenamid; Hydroxyflavone, wie zum Beispiel Eriodictyol, Homeriodictyol oder deren Natriumsalze); Hesperetin, Pholoeretin, Hydroxyflavane, 4-Hydroxychalkone; Extrakte auf Basis von Hydrangea dulcis (insbesondere solche, wie beschrieben in EP 2 298 084) oder Rubus ssp.; Gemische von Molkeproteinen mit Lecithinen, Hefeextrakte, Pflanzenhydrolysate, pulverisierte Gemüse (z.B. Zwiebelpulver, Tomatenpulver), Pflanzenextrakte (z.B. von Liebstöckel oder von Pilzen wie Shiitake), Meeralgen und Mineralsalzmischungen (insbesondere Mineralsalzmischungen, wie beschrieben in US 2009 214728).

Synthetische vorzugsweise in der erfindungsgemäßen Zusammensetzung zu verwendende Geschmacksstoffe zum Vermitteln, Modifizieren und/oder Verstärken einer, zwei oder sämtlicher der Geschmackseindrücke Umami, Kokumi und salzig sind vorzugsweise ausgewählt aus den chemischen Substanzen, die in den Veröffentlichungen US 2004 0202619, US 2004 0202760, US 2006 0057268 und US 2006 0068071 beschrieben sind, insbesondere (2E, 6Z)-N-cyclopropylnona-2,6-dienamid, (2E,6Z)-N-ethylnona-2,6-dienamid und N-[(2E)-3,7-dimethylocta-2,6-dienyl]-cyclopropancarboxamid, den chemischen Strukturen wie in US 2005 0084506 beschrieben, insbesondere N'-[(2-methoxy-4-methylphenyl)-methyl]-N-[2-(5-methyl-2-pyridyl)ethyl]-oxamid, N'-[(2,4-dimethoxyphenyl)-methyl]-N-[2-(2-pyridyl)-ethyl]-oxamid, N'-[(2-methoxy-4-methylphenyl)-methyl]-N-[2-(2-pyridyl)ethyl]-oxamid, N-(1-propylbutyl)-1,3-benzodioxole-5-carboxamid, und den chemischen Strukturen wie in WO 2011/004016 beschrieben, insbesondere 1-(2-Hydroxy-4-isobutoxyphenyl)-3-(2-pyridyl)-propan-1-on und 1-(2-Hydroxy-4-methoxyphenyl)-3-(2-pyridyl)-propan-1-on; Rubemamin, Rubemamid, Rebuscenamin, Rubescenamid, Zanthosin, Zanthosinamid, Dioxamin, Dioxamid, Zanthomamin und Zanthomamid sowie deren Gemische wie in EP 2 529 632 oder EP 2 737 807 beschrieben.

Zur Verstärkung des Süßgeschmacks werden Kohlenhydrat-reiche Lebensmittel, insbesondere Maltol oder Ethyl-Maltol, sowie weitere Geschmacksverstärker, insbesondere Glycin oder Neohesperidindihydrochalkon der erfindungsgemäßen Zusammensetzung zugesetzt.

Zusätzlich zu einem oder mehreren süßverstärkenden Stoff(en) oder zu einem oder mehreren Geschmacksmodulator(en) können in einer erfindungsgemäßen Zusammensetzung vorzugsweise Geschmackstoffe enthalten sein, die einen kribbelnden (tingling) oder kühlenden Effekt bewirken. Solche Geschmacksstoffe sind vorzugsweise gewählt aus der Gruppe, die besteht aus: Menthol und Mentholderivative wie zum Beispiel L-Menthol, D-Menthol, racemisches Menthol, Isomenthol, Neoisomenthol, Neomenthol; Menthylether wie zum Beispiel 3-(I-Menthoxy)-1,2-propandiol, 3-(I-Menthoxy)-2-methyl-1,2-propandiol, 3-(I-Menthylmethylether; Menthonglycerylacetal, Menthonglycerylketal oder Mischungen davon; Menthylester wie zum Beispiel Menthylformiat, Menthylacetat, Menthylisobutyrat, Menthyhydroxyisobutyrat, Menthyllactate, L-menthyl-L-lactat, L-Menthyl-D-lactat, Menthyl-(2-methoxy)acetat, Menthyl-(2-methoxyethoxy)-acetat, Menthylpyroglutamat; Menthylcarbonate wie zum Beispiel Menthylpropyleneglycolcarbonat, Menthylethyleneglycolcarbonat, Menthylglycerolcarbonat oder Mischungen davon; die Halbester von Mentholen mit einer Dicarbonsäure oder Derivate davon wie zum Beispiel Monomenthylsuccinat, Monomenthylglutarat, Monomenthylmalonat, O-Menthyl-bernsteinsäureester-N,N-(dimethyl)amid, O-Menthyl-bernsteinsäureesteramid), Menthancarbonsäuremaide (vorzugsweise Menthancarbonsäure-N-ethylamid or N^{α}-(Menthancarbonsäure) glycinethylester, wie beschrieben in US 4 150 052, Menthancarbonsäure-N-(4-cyanophenyl)-amid oder Menthancarbonsäure-N-(4-cyanomethylphenyl)-amid, wie beschrieben in WO 2005/049553); Menthancarbonsäure-N-(alkoxyalkyl)-amide); Menthon und Menthonederivative wie zum Beispiel L-Menthoneglycerinketal); 2,3-Dimethyl-2-(2-propyl)-buttersäurederivate wie zum Beispiel 2,3-Dimethyl-2-(2-propyl)-buttersäure-N-methylamid, Isopulegol oder seine Ester wie beispielsweise (I-(-)-Isopulegol, I-(-)-isopulegolacetat; Menthanderivative wie zum Beispiel p-Menthan-3,8-diol; Cubebol oder synthetische oder natürliche Mischungen, die Cubebol enthalten; Pyrrolidonderivative von Cycloalkyldionderivativen wie zum Beispiel 3-Methyl-2(1-pyrrolidinyl)-2-cyclopentene-1-on oder Tetrahydropyrimidine-2-one wie zum Beispiel Icilin or verwandten Verbindungen, wie beschrieben in WO 2004/026840); Carboxamide wie zum Beispiel N-(2-(pyridin-2-yl)-ethyl)-3-p-menthanecarboxamid oder verwandten Verbindungen wie zum Beispiel (1R,2S,5R)-N-(4-Methoxyphenyl)-5-methyl-2-(1-isopropyl)cyclohexancarboxamide; Oxamaten, vorzugsweise solche beschrieben in EP 2 033 688 und [(1R,2S,5R)-2-isopropyl-5-methyl-cyclohexyl] 2-(ethylamino)-2-oxo-acetate (X Cool).

Die erfindungsgemäße Zusammensetzung bzw. das erfindungsgemäße Zuckermassensubstitut ist dadurch gekennzeichnet, dass sie/es umfasst oder besteht aus:
3 bis 65 Gew.-% eines oder mehrerer Trägerstoffs/Trägerstoffe, bevorzugt 30 bis 50 Gew.-%;
0,5 bis 15 Gew.-% eines oder mehrerer Fetts oder Öls/Fette oder Öle, bevorzugt 1 bis 5 Gew.-%;
25 bis 70 Gew.-% kristallinem oder teilkristallinem Zucker, insbesondere kristalliner oder teilkristalliner Saccharose, als Hauptzucker, wobei der kristalline oder teilkristalline Zucker auf die Oberfläche des mit dem Öl oder Fett überzogenen Trägerstoffs aufgebracht ist, bevorzugt 45 bis 55 Gew.-%; und
optional 0 bis 10 Gew.-% einer oder mehrerer sensorisch aktiven Substanz(en), bevorzugt 0,05 bis 2 Gew.-%;
jeweils bezogen auf das Gesamtgewicht der erfindungsgemäßen Zusammensetzung.

Als besonders vorteilhaft erwies sich eine erfindungsgemäße Zusammensetzung, mit der folgenden Rezeptur zum Masseersatz von Zucker, insbesondere von Saccharose, in Backwaren:
2 bis 4 Gew.-% Maltodextrin DE 8;
0 bis 2 Gew.-% Inulin Frutafit IQ;
2 bis 4 Gew.-% Inulin Orafti HSI;
8 bis 12 Gew.-% Weizenmehl
45 bis 55 Gew.-% kristalliner oder teilkristalliner Zucker, insbesondere kristalline oder teilkristalline Saccharose;
1 bis 5 Gew.-% Pflanzenöl; und
0,05 bis 2 Gew.-% einer oder mehreren sensorisch aktiven Substanz(en);
jeweils bezogen auf das Gesamtgewicht der erfindungsgemäßen Zusammensetzung.

Im Sinne der vorliegenden Erfindung sind Gewichtsprozentangaben (Gew.-%) in Bezug auf die erfindungsgemäßen Gegenstände, d.h. die erfindungsgemäße Zusammensetzung, jeweils auf das Gesamtgewicht der jeweiligen Zusammensetzung bezogen, soweit nichts anderes angegeben ist.

In einer weiteren bevorzugten Variante gemäß dem ersten Aspekt der vorliegenden Erfindung wird das Aufbauagglomerations-Partikelkollektiv der Zusammensetzung mittels eines Aufbauagglomerationsverfahrens hergestellt. Folglich betrifft die vorliegende Erfindung auch ein Zuckermassensubstitut, welche/welches durch ein Aufbauagglomerationsverfahren hergestellt wird oder durch ein Aufbauagglomerationsverfahren erhältlich ist.

Üblicherweise beträgt der D50-Wert von kristalliner Saccharose mit einer Standardkörnung 280,0 µm. Bei der Herstellung des Aufbauagglomerations-Partikelkollektivs der erfindungsgemäßen Zusammensetzung wird daher angestrebt, annähernd die Partikelgröße von Saccharose zu erreichen.

Die Partikelgröße des Aufbauagglomerations-Partikelkollektivs bzw. des Agglomerats der erfindungsgemäßen Zusammensetzung liegt vorzugsweise im Bereich von 10 bis 500 µm, besonders bevorzugt im Bereich von 15 bis 460 µm mit einem D90-Wert von 300 µm, gemessen bei 3 bar durch Laserbeugungsspektroskopie. Als besonders vorteilhaft hat sich erwiesen, wenn die Partikelgröße des Aufbauagglomerations-Partikelkollektivs der erfindungsgemäßen Zusammensetzung im Bereich von 80 bis 410 µm mit einem D90-Wert von 285 µm, gemessen bei 3 bar durch Laserbeugungsspektroskopie.

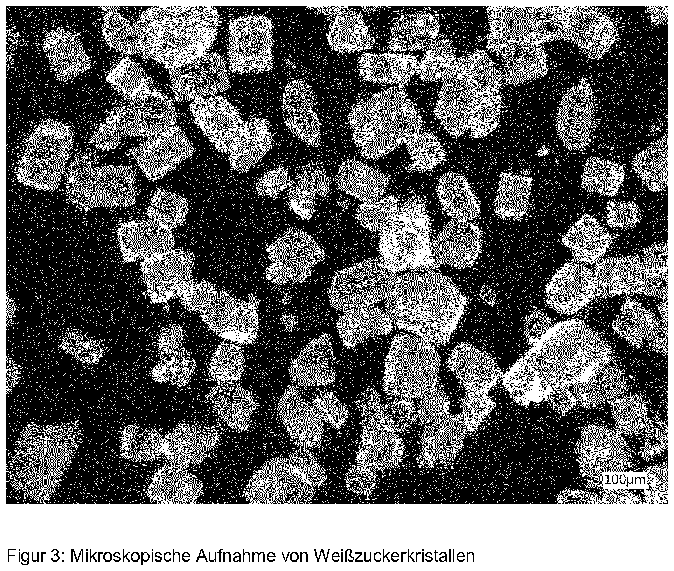

Wie aus den Figuren 2 und 3 sehr gut ersichtlich ist, ist die Partikelgröße des Aufbauagglomerations-Partikelkollektivs ähnlich zu der Partikelgröße von kristallinem Zucker.

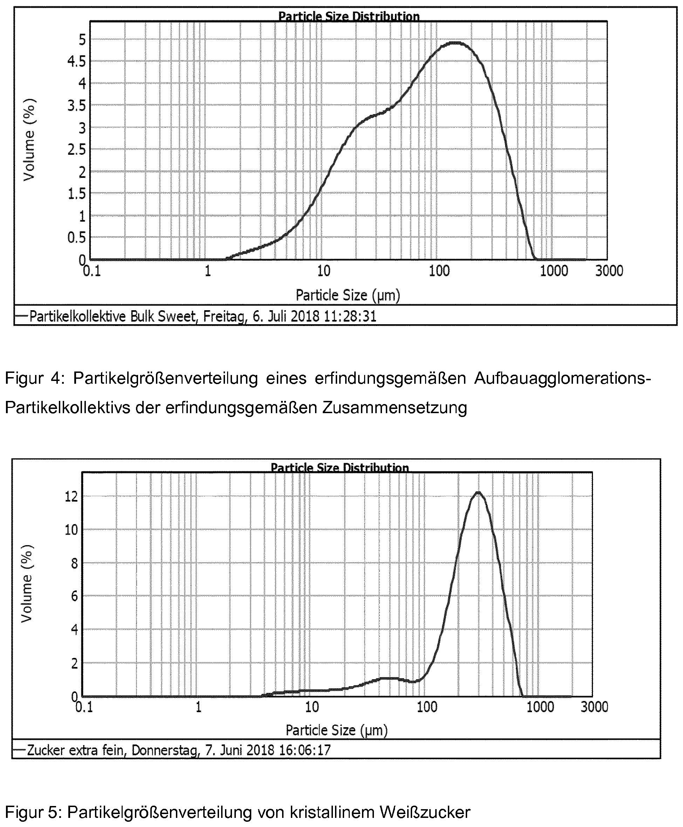

Die Partikelgrößenverteilung des Aufbauagglomerations-Partikelkollektivs bzw. des Agglomerats einer erfindungsgemäßen Zusammensetzung im Vergleich zur Partikelgrößenverteilung von kristallinem Zucker, ist in den Figuren 4 und 5 wiedergegeben. Vorzugsweise liegt die Partikelgrößenverteilung des Aufbauagglomerations-Partikelkollektivs bzw. des Agglomerats einer erfindungsgemäßen Zusammensetzung im Bereich eines D50 von 100 bis 500 µm, noch mehr bevorzugt im Bereich von 110 bis 260 µm.

Im Sinne der vorliegenden Erfindung gibt der Dxx-Wert den Partikeldurchmesser an, bei dem volumenbezogen xx Vol-% der Partikel eines Partikeldurchmessers einen kleineren oder gleichen Durchmesser aufweisen. Der mittlere Partikeldurchmesser entspricht demnach einem D50-Wert. Des Weiteren bedeutet beispielsweise ein D90-Wert von 400 µm, dass 90 Vol-% der Partikel einen Durchmesser von kleiner oder gleich 400 µm besitzen.

In einer weiteren Modifikation gemäß dem ersten Aspekt der vorliegenden Erfindung weist das Aufbauagglomerations-Partikelkollektiv eine Schüttdichte von 100 bis 900 g/dm³ auf, vorzugsweise eine Schüttdichte von 650 bis 800 g/dm³ auf. Es ist wichtig, dass die Schüttdichte der Aufbauagglomerations-Partikelkollektivs im Bereich der Schüttdichte der weiteren Zutaten der Backware liegt, da es sonst zu Separationen kommen könnte. Die homogene Verteilung aller Komponenten gewährleistet ein homogenes Backergebnis.

Der zweite Erfindungsgegenstand betrifft ein Verfahren zur Herstellung der erfindungsgemäßen Zusammensetzung, d.h. des erfindungsgemäßen Zuckermassensubstituts, welches die folgenden Schritte umfasst:
(i) Bereitstellen von (a) einem oder mehreren Trägerstoff(en); (b) einem oder mehreren Fett(en) oder Öl/Ölen; (c) kristallinem oder teilkristallinem Zucker, insbesondere kristalliner oder teilkristalliner Saccharose; und (d) optional einer oder mehrerer sensorisch aktiven Substanz(en); und
(ii) Agglomeration der Bestandteile (a), (b), (c) und optional (d) durch Aufbauagglomeration.

Demnach kann das erfindungsgemäße Herstellverfahren gemäß Schritten (i) und (ii) so durchgeführt werden, dass die Bestandteile (a) bis (c) und optional (d) der erfindungsgemäßen Zusammensetzung bereitgestellt werden und durch Aufbauagglomeration zu einem Aufbauagglomerations-Partikelkollektiv bzw. Agglomerat verarbeitet werden.

Für diesen Zweck wird in einer Ausgestaltung des erfindungsgemäßen Verfahrens zur Agglomeration der eine oder die mehreren Trägerstoff(e) in einem erfindungsgemäß einzusetzenden Mischer, vorzugsweise einem fluidisierenden Mischer, vorgelegt und fluidisiert. Hierbei wird der Trägerstoff/die Trägerstoffe in ein mechanisches Fließbett gebracht. Nach dem Fluidisieren des Trägerstoffs/der Trägerstoffe durch den Mischer wird mittels einer Düse das Fett oder Öl/die Fett oder Öle auf den Trägerstoff/die Trägerstoffe aufgesprüht, wodurch die Oberfläche des Trägerstoffes/der Trägerstoffe gleichmäßig benetzt wird/werden. Die Benetzung der Oberfläche mit Fett oder Öl sorgt für das Erzeugen von Kapillarkräften und somit dem Erzeugen von Haftkräften. In einem weiteren Schritt wird der kristalline oder teilkristalline Zucker, insbesondere kristalline oder teilkristalline Saccharose, der fluidisierten Mischung aus Trägerstoff/Trägerstoffen und Fett oder Öl/Fetten oder Ölen gegeben. Aus diese Weise werden Agglomeratstukturen erzeugt unter Erhalt eines Aufbauagglomerations-Partikelkollektivs der erfindungsgemäßen Zusammensetzung.

In einer alternativen Ausgestaltung des zweiten Erfindungsgegenstandes wird/werden der Trägerstoff/die Trägerstoffe und der kristalline oder teilkristalline Zucker, insbesondere die kristalline oder teilkristalline Saccharose, in einem erfindungsgemäß einzusetzenden Mischer, vorzugsweise einem fluidisierenden Mischer, vorgelegt und fluidisiert. Im nächsten Schritt wird das Fett oder Öl/die Fette oder Öle dem Mischer zugeführt, so dass der Trägerstoff/die Trägerstoffe ganz oder teilweise von dem Fett oder Öl/den Fetten oder Ölen benetzt wird/werden und der kristalline oder teilkristalline Zucker, insbesondere die kristalline oder teilkristalline Saccharose, zumindest teilweise auf der Oberfläche der mit dem Fett oder Öl/den Fetten oder Ölen benetzten Trägerstoff/Trägerstoffen haftet. Aus diese Weise werden Agglomeratstukturen erzeugt unter Erhalt eines Aufbauagglomerations-Partikelkollektivs der erfindungsgemäßen Zusammensetzung.

Das Verfahrens zur Herstellung der Zusammensetzung, d.h. des Zuckermassensubstituts gemäß der Erfindung bzw. die Aufbauagglomeration umfasst die folgenden Schritte:
- Vorlegen und Fluidisieren des einen oder der mehreren Trägerstoffs/der Trägerstoffe in einem Mischer;
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden; und
- Zuführen des kristallinen oder teilkristallinen Zuckers, insbesondere der kristallinen oder teilkristallinen Saccharose, so dass der kristalline oder teilkristalline Zucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
   oder
- Vorlegen und Fluidisieren des Trägerstoffs/der Trägerstoffe und des kristallinen oder teilkristallinen Zuckers, insbesondere der kristallinen oder teilkristallinen Saccharose, in einem Mischer; und
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden und der kristalline oder teilkristalline Zucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
unter Erhalt eines Aufbauagglomerations-Partikelkollektivs.

In einer weiteren Variante des zweiten Erfindungsgegenstandes gemäß der vorliegenden Erfindung umfasst das erfindungsgemäße Verfahren die folgenden Schritte:
- Vorlegen und Fluidisieren des einen oder der mehreren Trägerstoffs/der Trägerstoffe in einem Mischer;
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden; und
- Zuführen des kristallinen oder teilkristallinen Hauptzuckers, insbesondere der kristallinen oder teilkristallinen Saccharose, so dass der kristalline oder teilkristalline Hauptzucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
   unter Erhalt eines primären Feststoffagglomerats; und
- Zuführen von weiterem kristallinen oder teilkristallinen Zucker, insbesondere von weiterer kristalliner oder teilkristalliner Saccharose, dessen/deren Partikeldurchmesser kleiner ist als der Partikeldurchmesser des Hauptzuckers und Agglomeration auf der Oberfläche des primären Feststoffagglomerats;
   unter Erhalt eines Aufbauagglomerations-Partikelkollektivs;
   oder
- Vorlegen und Fluidisieren des Trägerstoffs/der Trägerstoffe und des kristallinen oder teilkristallinen Hauptzuckers, insbesondere der kristallinen oder teilkristallinen Saccharose, in einem Mischer; und
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden und der kristalline oder teilkristalline Hauptzucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
   unter Erhalt eines ersten primären Feststoffagglomerats; und
- Zuführen von weiterem kristallinen oder teilkristallinen Zucker, insbesondere von weiterer kristalliner oder teilkristalliner Saccharose, dessen/deren Partikeldurchmesser kleiner ist als der Partikeldurchmesser des Hauptzuckers und Agglomeration auf der Oberfläche des primären Feststoffagglomerats;
unter Erhalt eines Aufbauagglomerations-Partikelkollektivs;

Vorzugsweise weist der kristalline oder teilkristalline Hauptzucker eine Partikelgröße mit einem D50-Wert im Bereich von 120 bis 300 µm auf, bevorzugt im Bereich von 220 bis 280 µm auf und der weitere kristalline oder teilkristalline Zucker, dessen Partikeldurchmesser kleiner ist als der Partikeldurchmesser des Hauptzuckers, eine Partikelgröße mit einem D50-Wert im Bereich von 10 bis 50 µm, bevorzugt im Bereich von 12 bis 30 µm, auf.

Insbesondere wird in den zuletzt beschriebenen Verfahrensvarianten der Aufbauagglomerationsprozess des Partikelkollektivs der erfindungsgemäßen Zusammensetzung wie folgt durchgeführt: Zunächst wird eine kristalline oder teilkristalline Zuckerqualität mit einem D90-Wert von 150 bis 450 µm, besonders bevorzugt von 250 bis 350 µm, vorgelegt und mit den weiteren erfindungsgemäß ausgewählten Trägerstoffen vermengt. Die Fette und Öle werden separat vorgemischt und mit einer Zweistoffdüse fein verteilt auf das in einem Wirbelschichtapparat (z.B. fluidisierender Mischer, Wirbelschichtanlage,) fluidisierte Trägerstoffgemisch gesprüht. Dabei kommt es zu einer primären Feststoffagglomeration. In einem zweiten nachfolgenden Schritt wird eine weitere kristalline oder teilkristalline Zuckerqualität mit einem D90-Wert von 20µm bis 120µm, besonders bevorzugt von 50 bis 80 µm fein verteilt auf der Oberfläche des in der Wirbelschicht vorliegenden primären Feststoffagglomerates fixiert und damit die sekundäre Aufbauschicht fertiggestellt unter Erhalt des Aufbauagglomerations-Partikelkollektivs der erfindungsgemäßen Zusammensetzung.

Gemäß einer weiteren bevorzugten Ausgestaltung des zweiten Erfindungsgegenstandes ist das erfindungsgemäße Verfahren, dadurch gekennzeichnet, dass optional eine oder mehrere sensorisch aktive Substanz(en), also Bestandteil (d) bereitgestellt wird/werden. Liegt die eine oder die mehreren sensorisch aktive(n) Substanz(en) in flüssiger Form vor, wird/werden sie in den oben beschriebenen Verfahren mit dem/den Öl(en) oder Fett(en) gemischt, bevor das/die Fett(e) oder Öl(e) dem Mischer zugeführt wird. Liegt die eine oder die mehreren sensorisch aktive(n) Substanz(en) in fester, vorzugsweise pulverförmiger, Form vor, wird/werden sie in dem oben beschriebenen Verfahren dem/den Trägerstoff(en) beigemischt.

Das oben beschriebene Verfahrensprinzip zur Herstellung der erfindungsgemäßen Zusammensetzung kann mittels verschiedener Technologien ausgeführt werden. Erfindungsgemäß wird das Partikelkollektiv aus den Bestandteilen (a) bis (c) und optional (d) der erfindungsgemäßen Zusammensetzung durch ein Aufbauagglomerationsverfahren hergestellt.

Das Aufbauagglomerationsverfahren lässt sich wiederum unterteilen in eine trockene Agglomeration und Feuchtagglomeration, insbesondere Sprüh-, Wirbelschicht- und Roll- und Mischagglomeration. Als besonders vorteilhaft hat sich bei der Herstellung des Aufbauagglomerations-Partikelkollektivs der erfindungsgemäßen Zusammensetzung die Feuchtagglomeration erwiesen.

Typische erfindungsgemäß einzusetzende Mischer sind z.B. Pflugscharmischer oder Mehrstromfluidmischer.

In dem erfindungsgemäß bevorzugten Herstellungsverfahren wird ein unbeheizter Mischer bei Raumtemperatur verwendet. Dabei werden bevorzugt Umgebungstemperaturen von 10 °C bis 30 °C eingestellt, besonders bevorzugt Umgebungstemperaturen von 15 °C bis 20 °C.

Die Gesamtmischzeit für ein erfindungsgemäßes Herstellungsverfahren hängt üblicherweise von der Fluidisierung der Bestandteile (a) bis (c) und gegebenenfalls des weiteren Bestandteils (d) der erfindungsgemäßen Zusammensetzung ab, d. h. sie ist u. a. abhängig von den verwendeten Mischern und der Beschaffenheit der eingesetzten Rohstoffe der jeweilig vorstehenden Bestandteile. In einer bevorzugten Ausgestaltung des erfindungsgemäßen Herstellverfahrens beträgt die Gesamtmischzeit ≤ 10 Minuten.

Der dritte Erfindungsgegenstand der vorliegenden Erfindung betrifft die Verwendung der erfindungsgemäßen Zusammensetzung, d.h. des erfindungsgemäßen Zuckermassensubstituts zur Herstellung von Backwaren oder Backmischungen. Vorteilhafterweise wird die erfindungsgemäße Zusammensetzung zur Herstellung von Backwaren oder von Backmischungen verwendet, bei denen ein Teil des Zuckers, insbesondere der Saccharose, durch die erfindungsgemäße Zusammensetzung ersetzt wird. Die Backwaren sind ausgewählt aus der Gruppe, die besteht aus Brot, Kleingebäck, Feingebäck, insbesondere Kuchen, Torten, Hefeteiggebäck, Mürbeteiggebäck, Blätterteiggebäck, Strudelteiggebäck, Kekse und Dauerbackwaren, insbesondere Mürbeteiggebäck.

Backmischungen sind pulverförmige Gemische von Zutaten für einen Teig. Bestandteile jeder Backmischung sind Mehl, Salz und Triebmittel. Dazu kommen abhängig vom Rezept und der Art des Teiges Zucker und andere Zutaten. Diesen Backmischungen müssen bei der Zubereitung des Teiges die zum Rezept gehörigen Flüssigkeiten, wie beispielsweise Wasser oder Milch, Fette, wie beispielsweise Butter, und Eier noch hinzugefügt werden.

Der vierte Erfindungsgegenstand der vorliegenden Erfindung betrifft die Verwendung der erfindungsgemäßen Zusammensetzung, d.h. des erfindungsgemäßem Zuckermassensubstituts, zur Substitution von Zucker, insbesondere von Saccharose, in Backwaren. Mit den erfindungsgemäßen Zusammensetzungen lässt sich der Anteil an Zucker, insbesondere an Saccharose, in Backwaren um 20 bis 50 Gew.-% substituieren, insbesondere um 30 bis 40 Gew.-%.

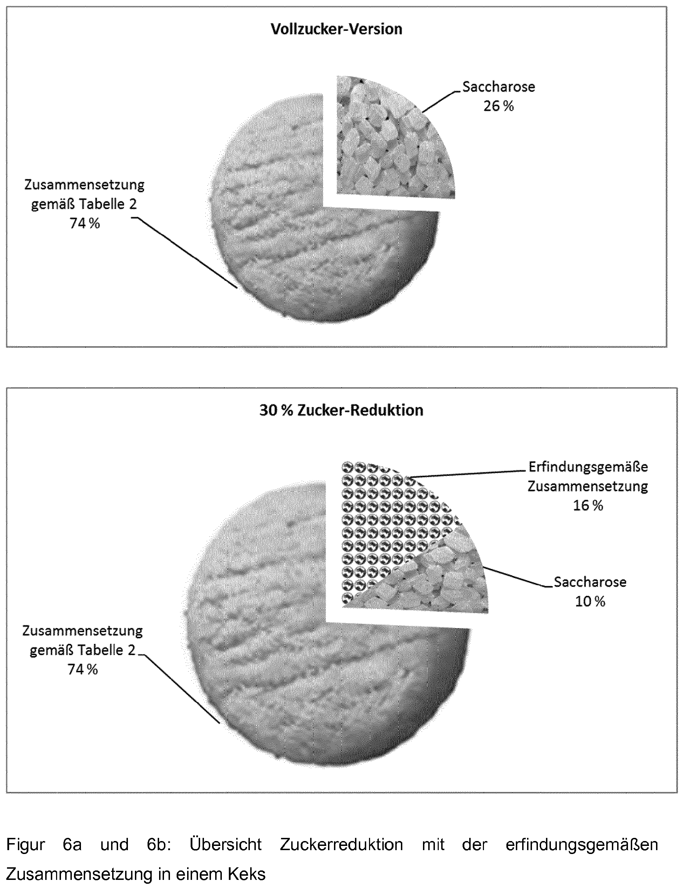

Die in Figur 6 gezeigten Abbildungen (Fig. 6a und Fig. 6b) veranschaulichen den Aufbau eines Kekses in der Vollzucker-Version (Zuckergehalt 26 Gew.-%, bezogen auf die Rezeptur) und den Aufbau eines Kekses umfassend das erfindungsgemäße Zuckermassensubstitut sowie die jeweiligen Keksrezepturen. Bei der Rezeptur des Kekses umfassend das erfindungsgemäße Zuckermassensubstitut werden 16 Gew.-% des Zuckergehaltes der Rezeptur der Vollzucker-Version (26 Gew.-%) durch die erfindungsgemäße Zusammensetzung ersetzt und somit der Zuckergehalt um 60 % auf 10 Gew.-% reduziert. Die hergestellte Backware umfassend das erfindungsgemäße Zuckermassensubstitut umfasst demnach einen Anteil von Zucker von 10 Gew.-% und einen Anteil an erfindungsgemäßer Zusammensetzung von etwa 16 Gew.-% in der eingesetzten Rezeptur anstelle von 26 Gew.-% Zucker in der Vollzucker-Version. Die Zusammensetzung der verwendeten erfindungsgemäßen Zusammensetzung ist wie folgt: 48 % Zucker, 49 % Trägerstoffgemisch, 2,5 % Öl, 0,5% sensorisch aktive Substanzen Da die verwendete erfindungsgemäße Zusammensetzung selber etwa 50 Gew.-% Zucker enthält, bedeutetet dies eine Zuckerreduktion von insgesamt 30 %.

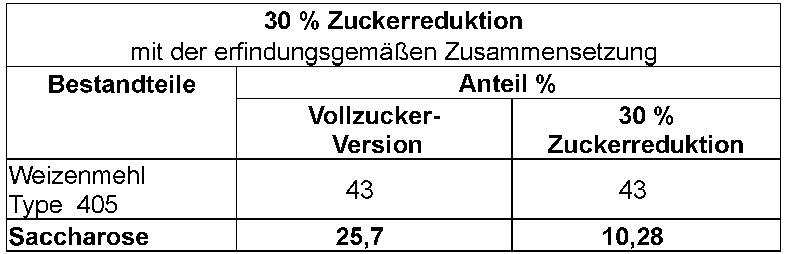

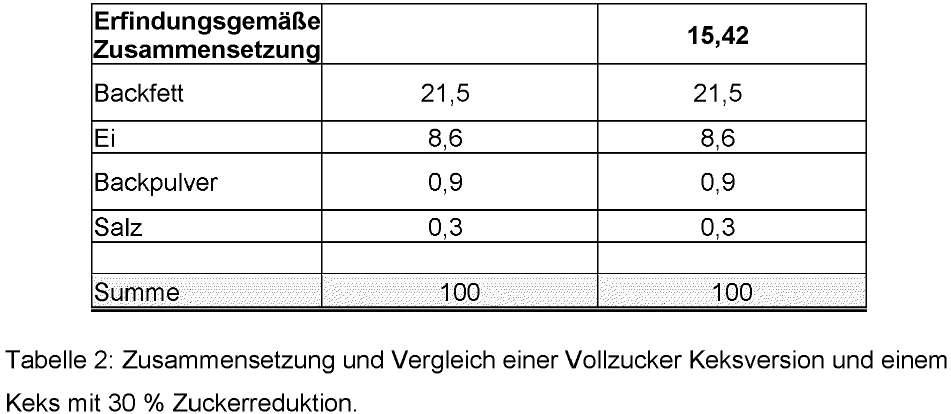

Wenn vergleichsweise in der o.g. Rezeptur der gesamte Zuckergehalt durch die erfindungsgemäße Zusammensetzung ersetzt wird, lässt sich damit der Zuckergehalt in dem Keks um 50 % reduzieren.

Wie aus der nachfolgenden Tabelle 3 ersichtlich ist, weichen die analysierten Backeigenschaften der mit der erfindungsgemäßen Zusammensetzung hergestellten Kekse, nicht deutlich von der Referenzprobe ab. Die sensorischen und analytischen Untersuchungsmethoden zur Beurteilung der Backeigenschaften sind weiter unten im Einzelnen näher beschrieben.

**Tabelle 3: Analysedaten der mit der erfindungsgemäßen Zusammensetzung hergestellten Kekse.**

| | Standard | 30 % zuckerreduziert | 50 % zuckerreduziert |
|---|---|---|---|
| Süße | 0 | -1,64 | -2,71 |
| L*-Wert | 75,0 | 75,3 | 75,4 |
| a*-Wert | 2,3 | 2,9 | 2,1 |
| b*-Wert | 26,6 | 26,0 | 26,0 |
| ΔE | - | 0,90 | 0,75 |
| Bruchfestigkeit | 556,6 N | 565,8 N | 571,9 N |
| Höhe | 0,58 cm | 0,58 cm | 0,58 cm |

Die vorliegende Erfindung kann für die Herstellung von Backwaren oder einer Backmischung, die die erfindungsgemäße Zusammensetzung umfassen, verwendet werden. Die Backwaren sind ausgewählt aus der Gruppe, die besteht aus Brot, Kleingebäck, Feingebäck, insbesondere Kuchen, Torten, Hefeteiggebäck, Mürbeteiggebäck, Blätterteiggebäck, Strudelteiggebäck, Kekse und Dauerbackwaren. Die Backwaren oder die Backmischung zeichnen sich dadurch aus, dass sie einen reduzierten Zuckergehalt aufweisen und folglich einen geringeren physiologischen Brennwert.

Weitere Aspekte der vorliegenden Erfindung ergeben sich aus den nachfolgenden Beispielen und den beigefügten Ansprüchen.

### Ausführungsbeispiele

Die vorliegende Erfindung wird im Folgenden durch Ausführungsbeispiele näher beschrieben, die jedoch den Schutzumfang der erfindungsgemäßen Gegenstände nicht limitieren.

Sofern nicht anders angegeben, beziehen sich alle Angaben auf das Gewicht.

### Herstellung der erfindungsgemäßen Zusammensetzungen zur Substitution von Zucker, insbesondere von Saccharose (erste Herstellungsvariante)

Zunächst werden Mischungen der Trägerstoffe nach den in der Tabelle 1 angegebenen Anteilen verwogen. Diese Trägerstoff-Mischungen (Beispiele 1 bis 26) werden dann mit den in der nachfolgend angegebenen Gesamtrezeptur gemäß Tabelle 4 angegebenen weiteren Bestandteilen zur Agglomeration eingesetzt:

**Tabelle 4: Rezeptur für die Agglomeration.**

| **Rohstoff** | **Anteil in %** |
|---|---|
| Kristalliner Weißzucker (> 99 %) | 50,00 |
| Trägerstoff-Mischung gemäß Tabelle 1 (Beispiele 1 bis 26), jeweils | 47,18 |
| Pflanzenöl | 2,50 |
| Sensorisch aktive Substanz | 0,32 |

Die Agglomeration wird wie folgt durchgeführt: Zunächst wird der kristalline Zucker mit den weiteren erfindungsgemäß ausgewählten Trägerstoffen vermengt. Das Pflanzenöl und die sensorisch aktive Substanz einer Aromenmischung, bestehend aus einem Modulator, einem gebratenen Zuckerrübentresteröl, Ei-, Butter- und einem Backaroma, werden separat vorgemischt und mit einer Zweistoffdüse fein verteilt auf das in einem Wirbelschichtapparat (z.B. fluidisierender Mischer, Wirbelschichtanlage) in der Wirbelschicht in einen fluidisierten Zustand versetzte Trägerstoffgemisch gesprüht. Dabei kommt es zu einer Agglomeration der Bestandteile unter Erhalt der Aufbauagglomerate der erfindungsgemäßen Zusammensetzungen aus den Proben 1 bis 26.

### Herstellung der erfindungsgemäßen Zusammensetzungen zur Substitution von Zucker, insbesondere von Saccharose (alternative Herstellungsvariante)

Zunächst werden Mischungen der Trägerstoffe nach den in der Tabelle 1 angegebenen Anteilen verwogen. Diese Trägerstoff-Mischungen (Beispiele 1 bis 26) werden dann mit den in der nachfolgend angegebenen Gesamtrezeptur gemäß Tabelle 5 angegebenen weiteren Bestandteilen zur Agglomeration eingesetzt:

**Tabelle 5: Rezeptur für die Agglomeration.**

| **Rohstoff** | **Anteil in %** |
|---|---|
| Kristalliner Weißzucker, D90-Wert < 90 µm | 28,20 |
| Kristalliner Weißzucker, D90-Wert < 300 µm | 21,80 |
| Trägerstoff-Mischung gemäß Tabelle 1 (Beispiele 1 bis 26), jeweils | 47,18 |
| Pflanzenöl | 2,50 |
| Sensorisch aktive Substanz | 0,32 |

Der Aufbauagglomerationsprozess des Partikelkollektivs in der alternativen Herstellungsvariante wird wie folgt durchgeführt: Zunächst wird kristalline Zucker mit einem D90-Wert von < 300 µm vorgelegt und mit den weiteren erfindungsgemäß ausgewählten Trägerstoffen vermengt. Das Pflanzenöl und die sensorisch aktive Substanz, einer Aromenmischung, bestehend aus einem Modulator, einem gebratenen Zuckerrübentresteröl, Ei-, Butter- und einem Backaroma werden separat vorgemischt und mit einer Zweistoffdüse fein verteilt auf das in einem Wirbelschichtapparat (z.B. fluidisierender Mischer, Wirbelschichtanlage,) fluidisierte Trägerstoffgemisch gesprüht. Dabei kommt es zu einer primären Feststoffagglomeration. In einem zweiten Schritt wird kristalliner Zuckermit einem D90-Wert von < 90 µm fein auf der Oberfläche des in der Wirbelschicht vorliegenden primären Feststoffagglomerates verteilt und fixiert und damit die sekundäre Aufbauschicht fertiggestellt und so das erfindungsgemäße Aufbauagglomerations-Partikelkollektiv der erfindungsgemäßen Zusammensetzung erhalten.

Nach dem Agglomerationsprozess gemäß der ersten Herstellungsvariante werden die fertigen Aufbauagglomerationsprodukte, d.h. die erfindungsgemäßen Zusammensetzungen der Proben 1 bis 26, jeweils in einer Gebäckrezeptur verbacken. Das Gebäck wird im Anschluss an den Backvorgang sensorisch und analytisch untersucht. Dabei werden die Süße, die Textur, die Farbe sowie die Gebäckhöhe des Gebäcks bewertet.

### Durchführung der Backversuche

Als verwendete Applikation für den Austausch von Zucker wird in der vorliegenden Erfindung ein Mürbeteiggebäck gewählt worden.

Die nachfolgende Tabelle 6 zeigt die Rezeptur für den Mürbeteig. Die Vollzuckervariante des Mürbeteigrezeptes zeichnet sich dadurch aus, dass der Zuckergehalt mehr als 25 % beträgt.

**Tabelle 6: Vollzuckervariante des Mürbeteigrezeptes.**

| **Rohstoffe** | **Anteil in %** |
|---|---|
| Weizenmehl Typ 405 | 42,96 |
| Saccharose Standard | 25,77 |
| Backfett | 21,48 |
| Vollei | 8,59 |
| Backpulver | 0,86 |
| Kochsalz | 0,34 |

In der Versuchsrezeptur wird der Zuckergehalt der Vollzuckervariante des Mürbeteigrezeptes um 50 % reduziert. Dabei werden 50 % der Saccharose durch die oben nach dem Agglomerationsprozess erhaltenen erfindungsgemäßen Zusammensetzungen mit den Trägerstoff-Mischungen gemäß Beispielen 1 bis 26 ersetzt, unter Erhalt der Proben 1 bis 26. Da die erfindungsgemäße Zusammensetzung selbst unter Verwendung von Zucker hergestellt wird, wird der Zuckergehalt in dem Mürbeteigrezept insgesamt um 30 % reduziert. Zudem wird für Saccharose Puderzucker verwendet. Die nachfolgende Tabelle 7 zeigt die Versuchsrezeptur.

**Tabelle 7: Mürbeteigrezept mit der erfindungsgemäßen Zusammensetzung als Zuckermassensubstitut.**

| **Rohstoffe** | **Anteil in %** |
|---|---|
| Weizenmehl Typ 405 | 42,96 |
| Saccharose Puderzucker | 12,89 |
| Zusammensetzungen gemäß der vorliegenden Erfindung (Proben 1 bis 26) | 12,88 |
| Backfett | 21,48 |
| Vollei | 8,59 |
| Backpulver | 0,86 |
| Kochsalz | 0,34 |

Das Mürbeteiggebäck wurde wie folgt hergestellt:
1. Alle Zutaten werden mittels der Satorius-Präzisionswaage verwogen.
2. In der Küchenmaschine Kenwood Major Titanium werden die Zutaten für 60 Sekunden bei minimaler Einstellung mit einem Teirührer vorvermischt.
3. Nach dem Vorvermischen wird das Gemisch für 180 Sekunden auf Stufe 1 geknetet.
4. Der so entstandene Teig wird zu einer Kugel geformt und einen Tag im Kühlschrank auf 7 °C abgekühlt.
5. Anschließend wird der Teig auf der Ausrollmaschine Fritsch Rollfix Mini 520 auf eine Teigdicke von 3 mm ausgerollt und auf ein Backblech überführt.
6. Der Teig wird mit dem Backblech im Kombidämpfer Rational CPC 61 bei 180 °C (trockene Umluft mit halber Lüftergeschwindigkeit) für 540 Sekunden gebacken.
7. Direkt nach dem Backprozess wird das Gebäck in 60x35 mm große Stücke geschnitten, wodurch eine unterschiedliche Bräunung vermieden wird.
   Das Gebäck wird bei Raumtemperatur für mindestens 3 h ausgekühlt.
8. Zuletzt werden die Kekse in Kunststoffbeutel mit einer Wasser- und Dampfbarriere verpackt und darin bis zu den weiteren Analysen gelagert.

### Sensorische und analytische Untersuchungsmethoden

Die sensorischen und analytischen Untersuchungsmethoden für die Gebäck-Proben 1 bis 26 wurden wir folgt durchgeführt.

### Sensorische Methoden

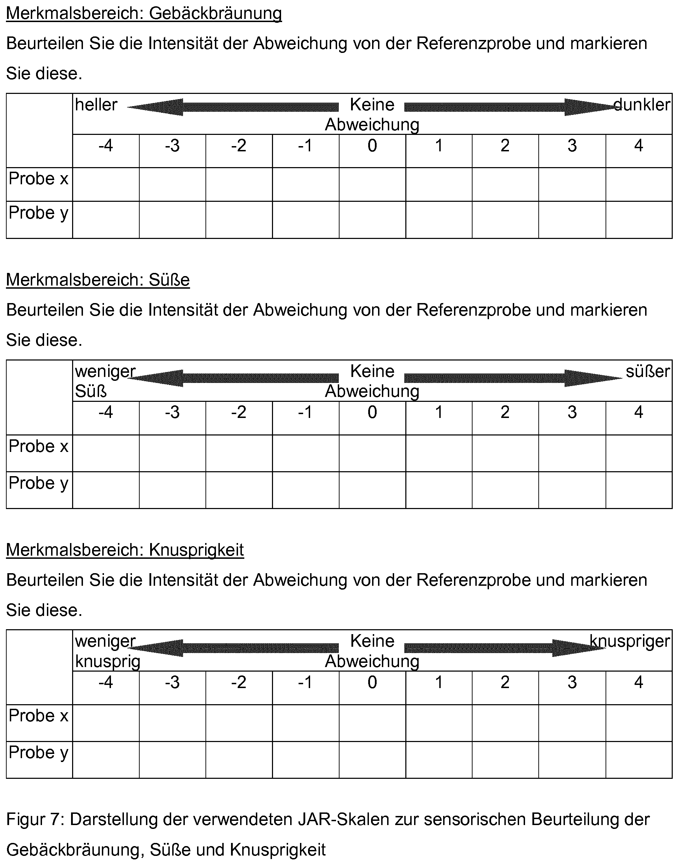

Zur Bewertung der sensorischen Parameter, wie Süße, Knusprigkeit und Bräunung, wird ein sensorischer Unterschiedstest verwendet. Nach der Herstellung werden die Kekse sensorisch begutachtet. Die sensorische Prüfung soll die auftretenden Unterschiede zwischen den gebackenen Keksen mit den erfindungsgemäßen Zusammensetzungen der Proben 1 bis 26 (Mürbeteigrezept mit den erfindungsgemäßen Zusammensetzung als Zuckermassensubstitut) und der Referenz (Vollzuckervariante des Mürbeteigrezeptes) aufzeigen, so dass eine Aussage bezüglich verschiedener Backeigenschaften getroffen werden kann. Die Bewertung wird durch einen Degree-of-Difference-Test durchgeführt. Dieser Test gibt die Abweichungen der Proben zu einer Referenzprobe wieder (I. Strobl, Sensorische Analyse: Methodenüberblick und Einsatzbereiche, DLG-Arbeitsblätter Sensorik, Nr. 02, 2013). Um die Unterschiede zu beschreiben, wird eine "JAR Skala" (just about right) verwendet (U.M. Annette Bongartz, Statistische Methoden in der Sensorik, Teil 2, Verbrauchertests, DLG-Arbeitsblätter Sensorik, Nr. 06, 06 2011. Anhand dieser Skala bewertet das Sensorikpanel die Abweichung der Proben 1 bis 26 jeweils zu der Referenz von - 4 bis 4 wobei 0 dem Wert der Referenzprobe entspricht (siehe Figur 7). Für die Durchführung steht ein ungeschultes Sensorikpanel mit 16 Personen zur Verfügung. Zunächst erhalten die Prüfer die Referenzprobe. Diese besteht aus dem Keks mit 100 % Saccharose. Anhand dieser Probe vergleichen und bewerten die Prüfer die Abweichungen der vorgegebenen Merkmale, wie "Bräunung", "Süße" und "Knusprigkeit" für die Proben 1 bis 26. Zur Auswertung werden der Mittelwert sowie die Standartabweichung verwendet.

### Farbbestimmung der Bräunung

Das Bräunungsverhalten der Kekse wird sowohl sensorisch verglichen als auch mittels L*a*b*-Farbmessung bestimmt. Der L*a*b*-Farbraum beschreibt alle, für das menschliche Auge wahrnehmbaren Farben und wird in der DIN EN ISO 11664-4 beschrieben (DIN EN ISO 11664-4, Farbmetrik - Teil 4: CIE1976 L*a*b* Farbenraum (ISO 11664-4:2008). L*a*b* steht für einen dreidimensionalen Farbraum, bei dem die Werte L*, a* und b* den Achsen in Raumrichtung entsprechen. Die L-Achse beschreibt die Helligkeit der Farbe. Der Wert 0 entspricht dabei Schwarz und der Wert 100 steht für Weiß. Die a*-Achse verläuft von den Werten -170 (Grün) bis +100 (Rot) und die b*-Achse verläuft von -100 (Blau) bis +150 (Gelb). Durch die Koordinaten in diesem rechtwinkligen Koordinatensystem können so alle sichtbaren Farben beschrieben werden. Der Unterschied zwischen zwei Farben kann als euklidischer Abstand zwischen den Punkten im Farbraum bestimmt werden. Mittels des ΔE-Wertes wird der Farbabstand der einzelnen Proben verglichen. Ein ΔE-Wert von < 1 wird vom menschlichen Auge nicht mehr wahrgenommen. Mittels eines L*a*b*-Farbmessgerätes wird durch eine Lichtquelle die zu messende Probe beleuchtet. Diese reflektiert das Licht in einem bestimmten Bereich des Farbspektrums. Der Monochromator der Messzelle detektiert die spektrale Verteilung der Reflexion über die einfallenden Wellenlängen. Dieser besteht aus einem Prisma, welches das Licht in die einzelnen Spektren aufspaltet. Durch Photodioden werden die Wellenlängen in elektrische Signale umgewandelt und mittels Mikroprozessoren in L*a*b*-Werte umgerechnet. Das L*a*b*-Farbmessgerät SpectroColor des Herstellers DR Lange wird mit dem Messsensor direkt auf die Oberfläche der Probe aufgelegt. Anschließend wird die Messung gestartet. Um leichte Unterschiede der Bräunung innerhalb einer Rezeptur zu relativieren, werden von jedem Rezept zehn Kekse gemessen, wobei von jedem Keks zwei Einzelmessungen genommen werden. Alle Messungen des gleichen Rezeptes werden mittels arithmetischem Mittel zu einem Wert zusammengefasst. Die Standartabweichung beschreibt dabei die Farbdifferenzen innerhalb einer Versuchsreihe.

### Gebäckhöhe

Die Gebäckhöhe ist ein wichtiger Kennwert zur Bewertung der Teigbeschaffenheit und des Backprozesses. Sie gibt Aufschluss über die Fähigkeit des Backtriebmittels zur Teiglockerung sowie über das Gashaltevermögen des Teiggerüstes. Da der Teig vor dem Backprozess auf 3,0 mm ausgerollt und erst nach dem Backen in Form geschnitten wird, kann die Gebäckhöhe direkt an dem Gebäck abgemessen werden. Dafür wird ein Messschieber mit einer Genauigkeit von ± 0,1 mm verwendet. Die Gebäckhöhe wird als arithmetisches Mittel von insgesamt zehn Messungen an Gebäckteilen ermittelt.

### Untersuchung der Bruchfestigkeit vom Gebäck

Eine typische Produkteigenschaft von Mürbeteiggebäcken ist deren Bruchfestigkeit. Um diese zu analysieren, wird der Textureanalyser TA.XTplus mit der 3-Punkt-Bruchfestigkeits-Testeinrichtung verwendet. Dabei wird die zu prüfende Probe auf zwei Auflagepunkte gelegt und von einer Biegevorrichtung zentral mit einer ansteigenden Kraft belastet. Die zugehörige Software wertet den Verlauf in einem Weg-Kraft-Diagramm aus. Das Funktionsprinzip eines Textureanalysers basiert auf einem Kraftsensor. Dieser zeichnet die erforderliche Kraft auf, um einen vorgegebenen Weg in einer definierten Geschwindigkeit zurückzulegen. Die Probe wird durch einen Stempel mit einer Kraft beaufschlagt, bis es zu einem Bruch kommt. Die dafür benötigte Kraft wird in einem Diagramm über den zurückgelegten Weg aufgezeichnet (Ltd., Stable Micro Systems, Texture Analysis Professionals Blog, (online), Available: http://textureanalysisprofessionals.blogspot.de/2015_04_19_archive.html). Dabei wird die maximale Kraft ausgewertet, die benötigt wird, um die Probe zu zerbrechen. Die zu messende Probe wird mittig auf die Stützen der Grundplatte gelegt. Der Spalt zwischen den Stützen beträgt 40 mm. Anschließend wird das Messprogramm gestartet. Von jeder Probe werden 10 Messungen durchgeführt. Zur Auswertung werden die maximalen Kraftpeaks verwendet. Diese werden als Härte der Probe bezeichnet. Aus den Messungen wird der Mittelwert gebildet. Der Textureanalyser wird mit folgenden Einstellungen verwendet:

| | |
|---|---|
| Mode: | Measure Force in Compression |
| Option: | Return to Start |
| Pre-Test Speed: | 1.0 mm/s |
| Test Speed: | 3.0 mm/s |
| Post-Test Speed: | 10.0 mm/s |
| Distance: | 5mm |
| Trigger Force: | Auto 50g |
| Tare Mode: | Auto |
| Data Acquisition Rate: | 500pps |

Die sensorischen und analytischen Untersuchungsergebnisse für die Gebäck-Proben 1 bis 26 sind in der nachfolgenden Tabelle 8 wiedergegeben:

**Tabelle 8: Ergebnisse der sensorischen und analytischen Untersuchungsergebnisse für das Keksgebäck aus den Proben 1 bis 26.**

| Beispiel: | Sensorik (Süße) | Härte (in N) | L* | a* | b* | Knusprigkeitsabweichung vom Standard | Aufbackhöhe (in cm) |
|---|---|---|---|---|---|---|---|
| Standard | 4 | 615,13 | 74,39 | 2,54 | 27,86 | 0 | 0,58 |
| 1 | 2,64 | 400,88 | 72,3 | 4,5 | 31,04 | -1,66 | 0,65 |
| 2 | 3,57 | 373,72 | 64,93 | 8,41 | 34,58 | -1,42 | 0,60 |
| 3 | 2,64 | 188,45 | 72,81 | 4,63 | 31,44 | -3,05 | 0,63 |
| 4 | 2,93 | 237,13 | 70,91 | 6,12 | 33,12 | -1,82 | 0,66 |
| 5 | 2,79 | 723,37 | 76,19 | 1,99 | 27,6 | 1,31 | 0,64 |
| 6 | 2,50 | 397,18 | 67,62 | 7,87 | 34,93 | -0,53 | 0,57 |
| 7 | 1,86 | 1449,30 | 73,21 | 2,3 | 27,07 | 3,62 | 0,56 |
| 8 | 2,50 | 400,24 | 72,19 | 4,12 | 30,79 | -1,77 | 0,59 |
| 9 | 3,21 | 809,54 | 68,08 | 6,49 | 33,7 | 2,45 | 0,52 |
| 10 | 2,50 | 460,90 | 71,44 | 4,46 | 31,21 | -0,89 | 0,57 |
| 11 | 2,14 | 593,21 | 72,63 | 4,67 | 32,24 | 0,68 | 0,57 |
| 12 | 1,93 | 748,38 | 66,36 | 7,62 | 34,33 | 1,99 | 0,58 |
| 13 | 2,29 | 540,42 | 69,65 | 6,27 | 33,44 | 0,21 | 0,59 |
| 14 | 2,71 | 811,93 | 62,47 | 9,91 | 36,41 | 1,13 | 0,54 |
| 15 | 2,57 | 701,94 | 68,93 | 4,98 | 32,03 | 0,69 | 0,63 |
| 16 | 1,79 | 1036,62 | 74,52 | 2,88 | 29,02 | 2,98 | 0,56 |
| 17 | 2,14 | 529,57 | 71,83 | 4,46 | 31,32 | - 0,33 | 0,54 |
| 18 | 2,64 | 635,15 | 68,83 | 7,02 | 34,15 | 0,21 | 0,62 |
| 19 | 2,43 | 865,20 | 69,5 | 5,33 | 32,82 | 1,42 | 0,61 |
| 20 | 2,14 | 156,43 | 71,56 | 3,9 | 30,44 | -3,22 | 0,58 |
| 21 | 2,21 | 830,85 | 71,17 | 4,66 | 31,15 | 2,36 | 0,59 |
| 22 | 1,93 | 113,68 | 72,78 | 4,15 | 30,89 | -3,88 | 0,64 |
| 23 | 2,21 | 726,35 | 72,84 | 4,49 | 31,57 | 0,56 | 0,54 |
| 24 | 1,71 | 326,84 | 79,46 | 1,23 | 25,14 | -1,10 | 0,57 |
| 25 | 2,86 | 449,23 | 72,49 | 3,71 | 30,23 | -1,74 | 0,61 |
| 26 | 2,07 | 351,20 | 74,19 | 3,35 | 30,8 | -1,51 | 0,53 |

Anhand der obigen Ergebnisse ist zu erkennen, dass im Wesentlichen die Backeigenschaften, die bewertet bzw. analysiert wurden, insbesondere Volumenbildung (Produktmatrix), Bräunung und Knusprigkeit, nicht deutlich von der Referenzprobe abweichen. Damit lassen sich mit der erfindungsgemäßen Zusammensetzung die Backeigenschaften, die Zucker, insbesondere Saccharose in Backwaren, insbesondere in Keksen aufweist, ersetzen. Gleichzeitig lassen sich mit der erfindungsgemäßen Zusammensetzung bis zu 50 % Zuckergehalt, insbesondere Saccharosegehalt, in Backwaren ohne wesentlichen Verlust der Backeigenschaften reduzieren.

Wie die obigen Ergebnisse zeigen, ist die Süßkraft bei den Keksen, die mit den erfindungsgemäßen Zusammensetzungen hergestellt wurden, deutlich reduziert, was auf den reduzierten Zuckergehalt in der Teigmischung zurückzuführen ist. Die fehlende Süßkraft kann optional durch den Bestandteil (d) der erfindungsgemäßen Zusammensetzung - sofern erwünscht - modifiziert oder vollständig ausgeglichen werden.

## Patentansprüche

1. Zuckermassensubstitut, umfassend ein oder bestehend aus einem Aufbauagglomerations-Partikelkollektiv, umfassend oder bestehend aus den folgenden Bestandteilen:
(a) 3 bis 65 Gew.-% eines oder mehrerer Trägerstoffe(s);
(b) 0,5 bis 15 Gew.-% eines oder mehrerer Fette(s) oder Öle(s);
(c) 25 bis 70 Gew.-% kristallinen oder teilkristallinen Zuckers, insbesondere kristalline oder teilkristalline Saccharose, als Hauptzucker, wobei der kristalline oder teilkristalline Zucker auf die Oberfläche des mit dem Öl oder Fett überzogenen Trägerstoffs aufgebracht ist; und
(d) optional 0 bis 10 Gew.-% einer oder mehrerer sensorisch aktiver Substanz(en).

2. Zuckermassensubstitut nach Anspruch 1, worin der eine oder die mehreren Trägerstoff/Trägerstoffe ausgewählt ist/sind aus der Gruppe, die besteht aus unverdaulichen Fasern und Ballaststoffen, Mehlen, Stärke und Stärkederivaten und Zuckeralkoholen oder Mischungen aus den vorgenannten Trägerstoffen.

3. Zuckermassensubstitut einem der Ansprüche 1 oder 2, worin das Mischungsverhältnis der Trägerstoffe
(i) Maltodextrin zu (ii) Inulin zu (iii) Weizenmehl im Bereich von
(i) 0 bis 100 Gew.-% zu (ii) 0 bis 100 Gew.-% zu (iii) 0 bis 100 Gew.-% liegt, bezogen auf das Gesamtgewicht der Trägerstoff-Mischung, insbesondere worin das Mischungsverhältnis der Trägerstoffe
(i) Maltodextrin zu (ii) Inulin zu (iii) Weizenmehl im Bereich von
(i) 10 bis 80 Gew.-% zu (ii) 10 bis 80 Gew.-% zu (iii) 10 bis 80 Gew.-% liegt, bezogen auf das Gesamtgewicht der Trägerstoff-Mischung.

4. Zuckermassensubstitut nach einem der vorangehenden Ansprüche, wobei die eine oder mehreren Fette(n) oder Öl(e) ausgewählt ist/sind aus Triglyceriden mit gesättigten oder ungesättigten C4- bis C18-Fettsäureresten, insbesondere mit gesättigten oder ungesättigten C8- bis C10-Fettsäureresten.

5. Zuckermassensubstitut nach einem der vorangehenden Ansprüche, wobei der kristalline oder teilkristalline Zucker, insbesondere die kristalline oder teilkristalline Saccharose, eine Partikelgröße mit einem D50-Wert im Bereich von 10 bis 300 µm aufweist.

6. Zuckermassensubstitut nach einem der vorangehenden Ansprüche, wobei der verwendete Zucker zwei unterschiedliche Körnungen aufweist: einen Hauptzucker im inneren des Agglomerats und einen weiteren Zucker auf der Oberfläche des Aufbauagglomerations-Partikelkollektivs, dessen Partikelgröße kleiner ist als die Partikelgröße des Hauptzuckers.

7. Zuckermassensubstitut nach einem der vorangehenden Ansprüche, worin der eine oder die mehreren sensorisch aktive(n) Substanzen ausgewählt ist/sind aus der Gruppe, die besteht aus süßenden Lebensmitteln, Süßstoffen, Aromastoffen und Geschmacksmodulatoren, wobei die süßenden Lebensmittel ausgewählt sind aus der Gruppe bestehend aus: flüssige oder trockene Konzentrate, bevorzugt Pulver, von Süßmolke, Süßkartoffel, Honig, Agave, Akazie, Fruchtdicksäften, insbesondere aus Banane, Weintraube, Apfel, Aprikose, Dattel, Zuckerrübensirup und Milchzucker.

8. Zuckermassensubstitut nach einem der vorangehenden Ansprüche, worin das Aufbauagglomerations-Partikelkollektiv eine Partikelgröße im Bereich von 10 µm bis 500 µm aufweist, insbesondere im Bereich von 15 µm bis 460 µm mit einem D(90)-Wert von 300 µm.

9. Zuckermassensubstitut nach einem der vorangehenden Ansprüche, worin das Aufbauagglomerations-Partikelkollektiv eine Schüttdichte im Bereich von 100 bis 900 g/dm³ aufweist, insbesondere im Bereich von 650 bis 800 g/dm³.

10. Verfahren zur Herstellung des Zuckermassensubstituts nach einem der Ansprüche 1 bis 9, umfassend oder bestehend aus den folgenden Schritten:
(i) Bereitstellen von (a) einem oder mehreren Trägerstoff(en); (b) einem oder mehreren Fett(en) oder Öl(en); (c) kristallinem Zucker, insbesondere kristalliner Saccharose, als Hauptzucker; und (d) optional einer oder mehrerer sensorisch aktiven Substanz(en); und
(ii) Agglomeration der Bestandteile (a), (b), (c) und optional (d) durch Aufbauagglomeration,
worin die Aufbauagglomeration die folgenden Schritte umfasst:
- Vorlegen und Fluidisieren des einen oder der mehreren Trägerstoffs/der Trägerstoffe in einem Mischer;
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden; und
- Zuführen des kristallinen oder teilkristallinen Zuckers, insbesondere der kristallinen oder teilkristallinen Saccharose, so dass der kristalline oder teilkristalline Zucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
oder
- Vorlegen und Fluidisieren des Trägerstoffs/der Trägerstoffe und des kristallinen oder teilkristallinen Zuckers, insbesondere der kristallinen oder teilkristallinen Saccharose, in einem Mischer; und
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden und der kristalline oder teilkristalline Zucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
unter Erhalt eines Aufbauagglomerations-Partikelkollektivs.

11. Verfahren zur Herstellung des Zuckermassensubstituts nach Anspruch 10, worin die Aufbauagglomeration die folgenden Schritte umfasst:
- Vorlegen und Fluidisieren des einen oder der mehreren Trägerstoffs/der Trägerstoffe in einem Mischer;
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden; und
- Zuführen des kristallinen oder teilkristallinen Hauptzuckers, insbesondere der kristallinen oder teilkristallinen Saccharose, so dass der kristalline oder teilkristalline Hauptzucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
unter Erhalt eines primären Feststoffagglomerats; und
- Zuführen eines weiteren kristallinen oder teilkristallinen Zuckers, dessen Partikelgröße kleiner ist als die Partikelgröße des Hauptzuckers und Agglomeration auf der Oberfläche des primären Feststoffagglomerats;
unter Erhalt eines Aufbauagglomerations-Partikelkollektivs;
oder
- Vorlegen und Fluidisieren des Trägerstoffs/der Trägerstoffe und des kristallinen oder teilkristallinen Hauptzuckers, insbesondere der kristallinen oder teilkristallinen Saccharose, in einem Mischer; und
- Zuführen des einen oder der mehreren Fetts/Fette oder Öls/Öle in den Mischer, so dass der Trägerstoff/die Trägerstoffe ganz oder teilweise von dem Fett oder Öl/den Fetten oder Ölen benetzt wird/werden und der kristalline oder teilkristalline Hauptzucker, insbesondere die kristalline oder teilkristalline Saccharose, zumindest teilweise auf der Oberfläche der mit dem Fett oder Öl/den Fetten oder Ölen benetztem/benetzten Trägerstoff/Trägerstoffen haftet;
unter Erhalt eines ersten primären Feststoffagglomerats; und
- Zuführen eines weiteren kristallinen oder teilkristallinen Zuckers, dessen Partikelgröße kleiner ist als die Partikelgröße des Hauptzuckers und Agglomeration auf der Oberfläche des primären Feststoffagglomerats;
unter Erhalt eines Aufbauagglomerations-Partikelkollektivs.

12. Verfahren zur Herstellung des Zuckermassensubstituts nach einem der Ansprüche 10 oder 11, worin die Aufbauagglomeration ausgewählt ist aus der Gruppe, die besteht aus trockener Agglomeration und Feuchtagglomeration, insbesondere Sprüh-, Wirbelschicht- und Roll- und Misch-Agglomeration.

13. Verwendung des Zuckermassensubstituts nach einem der Ansprüche 1 bis 9 zur Herstellung von Backwaren, ausgewählt aus der Gruppe, die besteht aus Brot, Kleingebäck, Feingebäck, insbesondere Kuchen, Torten, Hefeteiggebäck, Mürbeteiggebäck, Blätterteiggebäck, Strudelteiggebäck, Kekse und Dauerbackwaren, insbesondere Mürbeteiggebäck oder zur Herstellung von Backmischungen.

14. Verwendung des Zuckermassensubstituts nach einem der Ansprüche 1 bis 9 zur Substitution von Saccharose in Backwaren, insbesondere zur Substitution von Zucker, insbesondere von Saccharose, in Backwaren um 20 bis 50 Gew.-%, insbesondere um 30 bis 40 Gew.-%.

## Claims

1. Sugar mass substitute, comprising or consisting of a build-up agglomeration particle collective, comprising or consisting of the following constituents:
(a) 3 to 65% by weight of one or more carrier substance(s);
(b) 0.5 to 15% by weight of one or more fat(s) or oil(s);
(c) 25 to 70% by weight of crystalline or semi-crystalline sugar, in particular crystalline or semi-crystalline sucrose, as a main sugar, the crystalline or semi-crystalline sugar being applied to the surface of the carrier substance coated with the oil or fat; and
(d) optionally 0 to 10% by weight of one or more sensory active substance(s).

2. Sugar mass substitute according to claim 1, wherein the one or more carrier substance(s) is/are selected from the group consisting of indigestible fibers and bulking agents, flours, starch and starch derivatives, and sugar alcohols, or mixtures of the aforementioned carrier substances.

3. Sugar mass substitute according to any one of claims 1 or 2, wherein the mixing ratio of the carrier substances
(i) maltodextrin to (ii) inulin to (iii) wheat flour is in the range from
(i) 0 to 100% by weight to (ii) 0 to 100% by weight to (iii) 0 to 100% by weight, based on the total weight of the carrier substance mixture, in particular wherein the mixing ratio of the carrier substances
(i) maltodextrin to (ii) inulin to (iii) wheat flour is in the range from
(i) 10 to 80% by weight to (ii) 10 to 80% by weight to (iii) 10 to 80% by weight, based on the total weight of the carrier substance mixture.

4. Sugar mass substitute according to any one of the preceding claims, wherein the one or more fat(s) or oil(s) is/are selected from triglycerides having saturated or unsaturated C4 to C18 fatty acid residues, in particular having saturated or unsaturated C8 to C10 fatty acid residues.

5. Sugar mass substitute according to any one of the preceding claims, wherein the crystalline or semi-crystalline sugar, in particular the crystalline or semi-crystalline sucrose, has a particle size with a D50 value in the range from 10 to 300 µm.

6. Sugar mass substitute according to any one of the preceding claims, wherein the sugar used has two different grain sizes: a main sugar in the interior of the agglomerate and a further sugar on the surface of the build-up agglomeration particle collective, the particle size of which is smaller than the particle size of the main sugar.

7. Sugar mass substitute according to any one of the preceding claims, wherein the one or more sensory active substance(s) is/are selected from the group consisting of sweetening foodstuffs, sweeteners, flavorings, and taste modulators, the sweetening foodstuffs being selected from the group consisting of: liquid or dry concentrates, preferably powders, of sweet whey, sweet potato, honey, agave, acacia, thick fruit juices, in particular from banana, grape, apple, apricot, date, sugar beet syrup, and lactose.

8. Sugar mass substitute according to any one of the preceding claims, wherein the build-up agglomeration particle collective has a particle size in the range from 10 µm to 500 µm, in particular in the range from 15 µm to 460 µm, with a D(90) value of 300 µm.

9. Sugar mass substitute according to any one of the preceding claims, wherein the build-up agglomeration particle collective has a bulk density in the range from 100 to 900 g/dm³, in particular in the range from 650 to 800 g/dm³.

10. Method for producing the sugar mass substitute according to any one of claims 1 to 9, comprising or consisting of the following steps:
(i) providing (a) one or more carrier substance(s); (b) one or more fat(s) or oil(s); (c) crystalline sugar, in particular crystalline sucrose, as a main sugar; and (d) optionally one or more sensory active substance(s); and
(ii) agglomerating constituents (a), (b), (c) and optionally (d) by build-up agglomeration,
wherein the build-up agglomeration comprises the following steps:
- placing the one or more carrier substance(s) into a mixer and fluidizing same;
- adding the one or more fat(s) or oil(s) to the mixer such that the carrier substance(s) is/are fully or partially wetted by the fat(s) or oil(s); and
- adding the crystalline or semi-crystalline sugar, in particular the crystalline or semi-crystalline sucrose, such that the crystalline or semi-crystalline sugar, in particular the crystalline or semi-crystalline sucrose, adheres at least partially to the surface of the carrier substance(s) wetted with the fat(s) or oil(s);
or
- placing the carrier substances(s) and the crystalline or semi-crystalline sugar, in particular the crystalline or semi-crystalline sucrose, into a mixer and fluidizing same; and
- adding the one or more fat(s) or oil(s) to the mixer such that the carrier substance(s) is/are fully or partially wetted by the fat(s) or oil(s) and the crystalline or semi-crystalline sugar, in particular the crystalline or semi-crystalline sucrose, adheres at least partially to the surface of the carrier substance(s) wetted with the fat(s) or oil(s);
to obtain a build-up agglomeration particle collective.

11. Method for producing the sugar mass substitute according to claim 10, wherein the build-up agglomeration comprises the following steps:
- placing the one or more carrier substance(s) into a mixer and fluidizing same;
- adding the one or more fat(s) or oil(s) to the mixer such that the carrier substance(s) is/are fully or partially wetted by the fat(s) or oil(s); and
- adding the crystalline or semi-crystalline main sugar, in particular the crystalline or semi-crystalline sucrose, such that the crystalline or semi-crystalline main sugar, in particular the crystalline or semi-crystalline sucrose, adheres at least partially to the surface of the carrier substance(s) wetted with the fat(s) or oil(s);
to obtain a primary solid agglomerate; and
- adding a further crystalline or semi-crystalline sugar, the particle size of which is smaller than the particle size of the main sugar, and agglomerating it on the surface of the primary solid agglomerate;
to obtain a build-up agglomeration particle collective;
or
- placing the carrier substance(s) and the crystalline or semi-crystalline main sugar, in particular the crystalline or semi-crystalline sucrose, into a mixer and fluidizing same; and
- adding the one or more fat(s) or oil(s) to the mixer such that the carrier substance(s) is/are fully or partially wetted by the fat(s) or oil(s) and the crystalline or semi-crystalline main sugar, in particular the crystalline or semi-crystalline sucrose, adheres at least partially to the surface of the carrier substance(s) wetted with the fat(s) or oil(s);
to obtain a first primary solid agglomerate; and
- adding a further crystalline or semi-crystalline sugar, the particle size of which is smaller than the particle size of the main sugar, and agglomerating it on the surface of the primary solid agglomerate;
to obtain a build-up agglomeration particle collective.

12. Method for producing the sugar mass substitute according to any one of claims 10 or 11, wherein the build-up agglomeration is selected from the group consisting of dry agglomeration and wet agglomeration, in particular spray agglomeration, fluidized-bed agglomeration, rolling agglomeration, and mixing agglomeration.

13. Use of the sugar mass substitute according to any one of claims 1 to 9 for the production of baked goods selected from the group consisting of bread, small baked goods, fine baked goods, in particular cakes, tarts, baked goods made with leavened dough, baked goods made with shortcrust pastry, baked goods made with puff pastry, baked goods made with filo pastry, cookies, and long-life baked goods, in particular baked goods made with shortcrust pastry, or for the production of baking mixes.

14. Use of the sugar mass substitute according to any one of claims 1 to 9 for substituting sucrose in baked goods, in particular for substituting sugar, in particular sucrose, in baked goods by 20 to 50% by weight, in particular by 30 to 40% by weight.

## Revendications

1. Substitut de masse de sucre comprenant ou constitué d'un ensemble de particules agglomérées comprenant ou constitué des composants suivants :
(a) 3 à 65 % en poids d'un ou plusieurs supports ;
(b) 0,5 à 15 % en poids d'une ou plusieurs graisses ou huiles ;
(c) 25 à 70 % en poids de sucre cristallin ou partiellement cristallin, en particulier du saccharose cristallin ou partiellement cristallin, comme sucre principal, le sucre cristallin ou partiellement cristallin étant appliqué sur la surface du support enduit d'huile ou de graisse ; et
(d) facultativement 0 à 10 % en poids d'une ou plusieurs substances actives sur le plan sensoriel.

2. Substitut de masse de sucre selon la revendication 1, dans lequel le ou les supports sont choisis dans le groupe constitué par les fibres non digestibles et les fibres alimentaires, les farines, l'amidon et les dérivés d'amidon et les alcools de sucre ou des mélanges des supports précités.

3. Substitut de masse de sucre selon l'une des revendications 1 ou 2, dans lequel le rapport de mélange des supports
(i) maltodextrine, (ii) inuline et (iii) farine de blé est compris dans la plage allant de
(i) 0 à 100 % en poids, (ii) 0 à 100 % en poids, et (iii) 0 à 100 % en poids, par rapport au poids total du mélange de supports, en particulier dans lequel le rapport de mélange des supports
(i) maltodextrine, (ii) inuline, (iii) farine de blé est compris dans la plage allant de
(i) 10 à 80 % en poids, (ii) 10 à 80 % en poids, (iii) 10 à 80 % en poids, par rapport au poids total du mélange de supports.

4. Substitut de masse de sucre selon l'une des revendications précédentes, dans lequel la ou les graisses ou huiles sont choisies parmi les triglycérides avec des résidus d'acides gras saturés ou insaturés en C4 à C18, en particulier avec des résidus d'acides gras saturés ou insaturés en C8 à C10.

5. Substitut de masse de sucre selon l'une des revendications précédentes, dans lequel le sucre cristallin ou partiellement cristallin, en particulier le saccharose cristallin ou partiellement cristallin, présente une taille de particules avec une valeur D50 comprise entre 10 et 300 µm.

6. Substitut de masse de sucre selon l'une des revendications précédentes, dans lequel le sucre utilisé présente deux granulométries différentes : un sucre principal à l'intérieur de l'agglomérat et un autre sucre à la surface de l'ensemble de particules de l'agglomérat, dont la taille est inférieure à celle du sucre principal.

7. Substitut de masse de sucre selon l'une des revendications précédentes, dans lequel la ou les substances sensorielles actives sont choisies dans le groupe constitué par les aliments sucrants, les édulcorants, les arômes et les modulateurs de goût, les aliments sucrants étant choisis dans le groupe constitué par : des concentrés liquides ou secs, de préférence en poudre, de lactosérum doux, de patate douce, de miel, d'agave, d'acacia, de jus de fruits concentrés, en particulier de banane, de raisin, de pomme, d'abricot, de datte, de sirop de betterave sucrière et de lactose.

8. Substitut de masse de sucre selon l'une des revendications précédentes, dans lequel l'ensemble de particules agglomérées présente une taille de particules comprise entre 10 µm et 500 µm, en particulier entre 15 µm et 460 µm, avec une valeur D(90) de 300 µm.

9. Substitut de masse de sucre selon l'une des revendications précédentes, dans lequel l'ensemble de particules agglomérées présente une densité apparente comprise entre 100 et 900 g/dm3, en particulier comprise entre 650 et 800 g/dm3.

10. Procédé de fabrication du substitut de masse de sucre selon l'une des revendications 1 à 9, comprenant ou consistant en les étapes suivantes :
(i) mise à disposition (a) d'un ou plusieurs supports ; (b) d'une ou plusieurs graisses ou huiles ; (c) de sucre cristallin, en particulier de saccharose cristallin, en tant que sucre principal ; et (d) éventuellement d'une ou plusieurs substances actives sur le plan sensoriel ; et
(ii) agglomération des composants (a), (b), (c) et éventuellement (d) par agglomération structurale,
l'agglomération structurelle comprenant les étapes suivantes :
- mise en présence et fluidisation du ou des supports dans un mélangeur ;
- introduction d'une ou plusieurs graisses ou huiles dans le mélangeur de manière à ce que le ou les supports soient entièrement ou partiellement mouillés par la graisse ou les graisses ou l'huile ou les huiles ; et introduction du sucre cristallin ou partiellement cristallin, en particulier du saccharose cristallin ou partiellement cristallin, de telle sorte que le sucre cristallin ou partiellement cristallin, en particulier le saccharose cristallin ou partiellement cristallin, adhère au moins partiellement à la surface du ou des supports mouillés par la graisse ou les graisses ou l'huile ou les huiles ;
ou
- présentation et fluidification du ou des supports et du sucre cristallin ou partiellement cristallin, en particulier du saccharose cristallin ou partiellement cristallin, dans un mélangeur ; et
- introduction de la ou des graisses ou huiles dans le mélangeur de telle sorte que le ou les supports soient entièrement ou partiellement mouillés par la graisse ou les graisses ou l'huile ou les huiles et que le sucre cristallin ou semi-cristallin, en particulier le saccharose cristallin ou semi-cristallin, adhère au moins partiellement à la surface du ou des supports mouillés par la graisse ou la ou les huiles ;
pour obtenir un ensemble de particules agglomérées.

11. Procédé de fabrication du substitut de masse de sucre selon la revendication 10, dans lequel l'agglomération structurelle comprend les étapes suivantes :
- présentation et fluidification du ou des supports dans un mélangeur ;
- introduction d'une ou plusieurs graisses ou huiles dans le mélangeur de manière à ce que le ou les supports soient entièrement ou partiellement mouillés par la graisse ou les graisses ou l'huile ou les huiles ; et introduction du sucre principal cristallin ou partiellement cristallin, en particulier du saccharose cristallin ou partiellement cristallin, de telle sorte que le sucre principal cristallin ou partiellement cristallin, en particulier le saccharose cristallin ou partiellement cristallin, adhère au moins partiellement à la surface du ou des supports mouillés par la graisse ou les graisses ou l'huile ou les huiles ;
pour obtenir un agglomérat primaire de matière solide ; et
- ajout d'un autre sucre cristallin ou partiellement cristallin dont la taille des particules est inférieure à la taille des particules du sucre principal et agglomération à la surface de l'agglomérat primaire de matière solide ;
pour obtenir un ensemble de particules agglomérées ; ou
- présentation et fluidification du ou des supports et du sucre principal cristallin ou partiellement cristallin, en particulier du saccharose cristallin ou partiellement cristallin, dans un mélangeur ; et
- introduction d'une ou plusieurs graisses ou huiles dans le mélangeur, de telle sorte que le ou les supports soient entièrement ou partiellement mouillés par la graisse ou les graisses ou l'huile ou les huiles et que le sucre principal cristallin ou partiellement cristallin, en particulier le saccharose cristallin ou partiellement cristallin, adhère au moins partiellement à la surface du ou des supports mouillés par la ou les graisses ou la ou les huiles ;
pour obtenir un premier agglomérat primaire de matière solide ; et
- ajout d'un autre sucre cristallin ou partiellement cristallin dont la taille des particules est inférieure à celle du sucre principal et agglomération à la surface de l'agglomérat primaire de matière solide ;
pour obtenir un ensemble de particules agglomérées.

12. Procédé de fabrication du substitut de masse de sucre selon l'une des revendications 10 ou 11, dans lequel l'agglomération de structure est choisie parmi le groupe constitué de l'agglomération sèche et de l'agglomération humide, en particulier l'agglomération par pulvérisation, l'agglomération en lit fluidisé et l'agglomération par roulage et mélange.

13. Utilisation du substitut de masse de sucre selon l'une des revendications 1 à 9 pour la fabrication de produits de boulangerie choisis parmi le groupe constitué du pain, des petits gâteaux, des pâtisseries fines, en particulier des gâteaux, des tartes, des pâtisseries à base de pâte levée, des pâtisseries à base de pâte brisée, des pâtisseries à base de pâte feuilletée, pâtisseries à base de pâte à strudel, biscuits et produits de biscuiterie, en particulier les pâtisseries à base de pâte brisée, ou pour la fabrication de mélanges pour la cuisson.

14. Utilisation du substitut de masse de sucre selon l'une des revendications 1 à 9 pour remplacer le saccharose dans les produits de boulangerie, en particulier pour remplacer le sucre, en particulier le saccharose, dans les produits de boulangerie à raison de 20 à 50 % en poids, en particulier de 30 à 40 % en poids.
